# EUROPÄISCHE PATENTSCHRIFT

(11) **EP 1 292 644 B1**
(45) Veröffentlichungstag und Bekanntmachung des Hinweises auf die Patenterteilung: **15.09.2004**
(21) Anmeldenummer: 01962735.5
(22) Anmeldetag: 13.06.2001
(51) Int. Cl.: C09B 67/20, C08F 10/00

(54) **PIGMENTKONZENTRATE UND VERFAHREN ZU IHRER HERSTELLUNG**
PIGMENT CONCENTRATES AND METHOD FOR PRODUCING THEM
CONCENTRE DE PIGMENTS ET SON PROCEDE DE FABRICATION

(30) Priorität: 20.06.2000 DE 10029327
(43) Veröffentlichungstag der Anmeldung: 19.03.2003
(73) Patentinhaber: BASF AKTIENGESELLSCHAFT, 67056 Ludwigshafen (DE)
(72) Erfinder: MIHAN, Shahram, 67061 Ludwigshafen (DE); DECKERS, Andreas, 55234 Flomborn (DE)
(86) Internationale Anmeldenummer: PCT/EP2001/006689
(87) Internationale Veröffentlichungsnummer: WO 2001/098415

(56) Entgegenhaltungen:
- EP-A- 0 328 753
- EP-A- 0 602 509
- EP-A- 0 890 584
- WO-A-00/58319
- DATABASE WPI Section Ch, Week 199908 Derwent Publications Ltd., London, GB; Class A17, AN 1999-090153 XP002184960 -& JP 10 324782 A (NIPPON UNICAR CO LTD), 8. Dezember 1998 (1998-12-08)
- DATABASE WPI Section Ch, Week 199926 Derwent Publications Ltd., London, GB; Class A17, AN 1999-308256 XP002184961 & JP 11 106573 A (MITSUBISHI CHEM CORP), 20. April 1999 (1999-04-20)

## Beschreibung

Die vorliegende Erfindung betrifft Pigmentkonzentrate, enthaltend
A) mindestens ein Farbstoffpigment,
B) ein Polyolefinwachs, das hergestellt wird aus einem oder mehreren Olefinen durch Katalyse mit einem Single-Site-Katalysator auf Basis eines Komplexes der Formel Ia bis Ic, 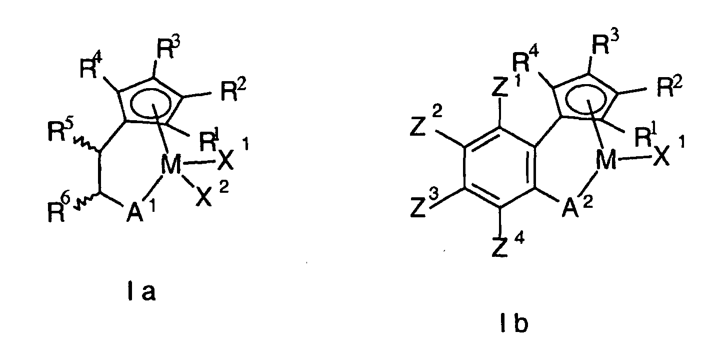 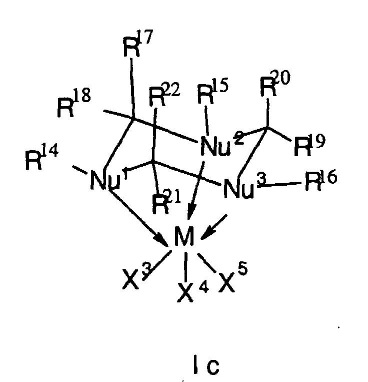 in denen die Variablen wie folgt definiert sind:
   - M: ist ein Element aus der Reihe V, Nb, Ta, Cr, Mo, W, Mn, Fe in der Oxidationsstufe +3
   - X¹ bis X⁵: ausgewählt aus Halogen, Trifluoracetat, BF₄⁻, PF₆⁻ oder SbF₆⁻, C₁-C₁₈-Alkyl, C₃-C₁₂-Cycloalkyl, C₇- bis C₂₀-Aralkyl, C₆-C₁₄-Aryl, C₁-C₁₂-Alkoxy, NR⁸R⁹, wobei R⁸ und R⁹ unabhängig voneinander aus Wasserstoff, C₁-C₁₂-Alkyl, C₂-C₁₂-Alkenyl und C₆-C₁₄-Aryl ausgewählt sind, die einen gesättigten oder ungesättigten 5- bis 10-gliedrigen Ring bilden können;
   - R¹ bis R⁶, Z¹ bis Z⁴ und R¹⁴ bis R¹⁶: unabhängig voneinander gewählt aus
   Wasserstoff,
   Halogen,
   C₁-C₁₈-Alkyl,
   ein- oder mehrfach mit Donoratomen substituiertes
   C₁-C₁₂-Alkyl,
   ein- oder mehrfach halogenierte C₁-C₁₂-Alkylgruppen,
   C₂-C₁₂-Alkenyl,
   C₃-C₁₂-Cycloalkyl,
   C₇- bis C₂₀-Aralkyl,
   C₆-C₁₄-Aryl,
   Silyl SiR¹⁰R¹¹R¹², wobei R¹⁰ bis R¹² unabhängig voneinander aus Wasserstoff, C₁-C₁₂-Alkyl, C₇-C₁₅-Aralkyl und
   C₆-C₁₄-Aryl ausgewählt sind;
   Siloxy OSiR¹⁰R¹¹R¹²,
   C₁-C₁₂-Alkoxy,
   C₆-C₁₄-Aryl, das seinerseits substituiert ist mit einem oder mehreren C₁-C₁₂-Alkyl, C₁-C₁₂-Alkenyl, C₃-C₁₂-Cycloalkyl, C₆-C₁₄-Aryl, Silyl SiR¹⁰R¹¹R¹², Siloxy OSiR¹⁰R¹¹R¹² oder C₁-C₁₂-Alkoxy;
   wobei zwei benachbarte Reste miteinander unter Einbeziehung des Stammaromaten in Formel I a bzw. I b einen 5-bis 10-gliedrigen Ring bilden können;
   - R¹⁷ bis R²²: unabhängig voneinander gewählt aus
   Wasserstoff,
   C₁-C₁₈-Alkyl,
   ein- oder mehrfach mit Donoratomen substituiertes
   C₁-C₁₂-Alkyl,
   ein- oder mehrfach halogenierte C₁-C₁₂-Alkylgruppen,
   C₂-C₁₂-Alkenyl,
   C₃-C₁₂-Cycloalkyl,
   C₇- bis C₂₀-Aralkyl,
   C₆-C₁₄-Aryl,
   Silyl SiR¹⁰R¹¹R¹², wobei R¹⁰ bis R¹² unabhängig voneinander aus Wasserstoff, C₁-C₁₂-Alkyl, C₇-C₁₅-Aralkyl und
   C₆-C₁₄-Aryl ausgewählt sind;
   Siloxy OSiR¹⁰R¹¹R¹²,
   C₁-C₁₂-Alkoxy,
   C₆-C₁₄-Aryl, das seinerseits substituiert ist mit einem oder mehreren C₁-C₁₂-Alkyl, C₁-C₁₂-Alkenyl, C₃-C₁₂-Cycloalkyl, C₆-C₁₄-Aryl, Silyl SiR¹⁰R¹¹R¹², Siloxy OSiR¹⁰R¹¹R¹² oder C₁-C₁₂-Alkoxy;
   wobei zwei benachbarte Reste R¹⁴ bis R²² in Formel I c miteinander einen gesättigten oder ungesättigten 4- bis 9-gliedrigen Ring bilden können;
   - A¹: O-R¹³, S-R¹³, N-(R¹³)₂ oder P-(R¹³)₂ zu verstehen, wobei R¹³ ausgewählt wird aus Halogen, C₁-C₁₂-Alkyl, C₃-C₁₂-Cycloalkyl, substituierten oder unsubstituierten C₆-C₁₄-Arylgruppen oder C₁-C₁₂-Alkoxygruppen und wobei diese Gruppen wie bei R¹ bis R⁶ definiert sind;
   - A²: Sauerstoff, Schwefel, N-R¹³ oder P-R¹³ zu verstehen, wobei R¹³ wie oben definiert ist;
   wobei Z⁴ und A² in Formel I b miteinander unter Einbeziehung des Phenylrings in Formel I b einen 5- bis 10-gliedrigen Ring bilden können;
   Nu¹ bis Nu³ jeweils N oder P bedeuten.
C) optional einen thermoplastischen Kunststoff und
D) optional Zuschlagstoffe.

Zahlreiche Pigmente werden in der Form eines Pigmentkonzentrats vermarktet, da dies die Verarbeitung beim Einfärben von Kunststoffen erleichtert. Diese Formulierungen enthalten im Allgemeinen neben dem Pigment ein Dispergiermittel, beispielsweise ein Wachs, sowie optional einen thermoplastischen Kunststoff, meistens ein Polyolefin. Der thermoplastische Kunststoff wird auch als Trägerpolymer bezeichnet. Das Wachs dient dazu, das Pigment in der Formulierung fein zu verteilen und in dieser Verteilung zu stabilisieren. Eine marktübliche Formulierung eines derartigen Pigmentkonzentrats ("Masterbatch") enthält 25 Gew.-% Pigment, 10 Gew.-% Wachs und 65 Gew.-% eines Polyethylenkunststoffes. Als Wachs wird häufig ein Polyethylenwachs verwendet, dass sich beispielsweise durch radikalische Polymerisation oder Ziegler-Natta-Katalyse erhalten lässt. Das Polyethylenwachs kann beispielsweise durch Oxidation polar modifiziert werden. Die Verhältnisse der Einzelkomponenten können durchaus in gewissen Grenzen variiert werden.

Entscheidende Voraussetzung für die Anwendbarkeit eines derartigen Pigmentkonzentrats ist die richtige Auswahl der Wachskomponente. Obwohl selbst nicht farbig, beeinflusst sie die Brillanz des Pigmentkonzentrats. Für genauere Angaben vgl. beispielsweise die Produktbroschüre "Luwax® - Anwendung in Pigmentkonzentraten" über Polyethylenwachse der BASF AG.

Die Pigment-Agglomerate müssen gut durch das Wachs benetzt werden, damit ein Zusammenklumpen der Agglomerate verhindert wird. Eine kleine Anzahl größerer Pigment-Agglomerate trägt weniger zur Farbwirkung des betreffenden Pigments bei als eine größere Anzahl kleinerer Pigment-Agglomerate.

Es ist also eine Aufgabe, während des Formulierungsprozesses keine großen Pigment-Agglomerate entstehen zu lassen. Weiterhin ist es wünschenswert, eventuell vorher gebildete agglomerierte Pigmente zu separieren und in die sogenannten Primärpartikel aufzuspalten. Schließlich sollen die Primärpartikel auch nach dem Formulierungsprozess separiert bleiben und beim Abkühlen nicht wieder aggregieren.

Dazu werden mehrere Anforderungen an das Wachs gestellt. Eine dieser Anforderungen betrifft die Viskosität der Schmelze. Die Viskosität der Schmelze sollte möglichst niedrig sein, damit während der Formulierung, die üblicherweise durch Mischen bei einer Temperatur oberhalb der Schmelztemperatur des Wachses erfolgt, das aufgeschmolzene Wachs gut durch die Hohlräume innerhalb der Agglomerate des Pigments penetrieren kann. Durch die so ausgeübten Scherkräfte erfolgt ein leichteres Aufspalten der Agglomerate in die Primärpartikel.

Auch die Benetzungsfähigkeit der Wachse sollte gut sein.

Die Benetzungsfähigkeit der Wachse kann durch den Einbau polarer Gruppen in das Wachs verbessert werden. Polare Gruppen können grundsätzlich durch mehrere Verfahrensschritte in ein Wachs eingeführt werden.

Eine Methode ist, das Wachs durch Luftsauerstoff oder Peroxidverbindungen teilweise abzubauen. Als Peroxidverbindungen können beispielsweise Wasserstoffperoxid (H₂O₂) oder Dialkylperoxide verwendet werden. Durch partielle Abbaumethoden werden Hydroxylgruppen und Carboxylgruppen als polare Gruppen in die Makromoleküle eingeführt. Diese polaren Gruppen sind ungleichmäßig über das Molekül verteilt, wodurch die Benetzungsfähigkeit der Molekülketten der Wachse nicht optimal sind.

Eine andere Methode besteht darin, polare Comonomere wie Acrylsäure, Methacrylsäure, Acrylsäureester, Methacrylsäureester oder Vinylacetat, die optional verseift werden können. Nachteilig ist an diesem Verfahren, dass polare Comonomere als Katalysatorgifte für Ziegler-Natta-Katalysatoren agieren können und deshalb die Katalysatoren an Aktivität verlieren. Ein weiterer Nachteil ist, dass die Comonomere nicht gleichmäßig in die Wachse eingebaut werden. Üblicherweise bauen Comonomere bevorzugt in die kurzket.tigen Moleküle ein, was zu unerwünscht uneinheitlichen Eigenschaften des Wachses führt.

Es hat sich nun gezeigt, dass viele Pigmentkonzentrate für hochwertige Anwendungen eine ungenügende Brillanz aufweisen. Die Lösung dieses Problems kann nur begrenzt durch einen größeren Anteil an Pigment gelingen. Für den Herstellungspreis eines Pigmentkonzentrats spielt der Preis des Pigments die entscheidende Rolle. Deshalb würde ein höherer Anteil an Pigment wirtschaftlich nachteilig sein.

Umgekehrt kann es auch wünschenswert sein, für weniger hochwertige Anwendungen ein äquivalentes Pigmentkonzentrat bereitzustellen, welches geringere Anteile des teuren Pigments aufweist.

Schließlich hat sich gezeigt, dass bei hohen Pigmentkonzentrationen die Brillanz der Masterbatche nicht mehr wesentlich steigt, was auf eine nicht mehr einwandfreie Dispergierqualität zurückzuführen ist. Schlecht dispergierte Agglomerate lassen sich beispielsweise mikroskopisch nachweisen.

Es ist also wünschenswert, Wachse für Pigmentkonzentrate zur Verfügung zu haben, die besonders gut dispergierbar sind und eine besonders gute Benetzbarkeit aufweisen. Dazu sollten solche Wachse gut geeignet sein, die eine möglichst einheitliche Struktur aufweisen.

Polymere und Copolymere mit einheitlicher Struktur sind aus Olefinen durch Katalyse mit Single-Site-Katalysatoren zugänglich. Aus EP-A 0 602 509 ist bekannt, dass sich Wachse erhalten lassen, indem man Metallocene mit Hilfe eines Cokatalysators aktiviert und in Gegenwart von Wasserstoff mit Olefinen umsetzt. Verwendungsbeispiele werden nicht aufgeführt.

Speziell ist aus EP-A 0 890 584 die Verwendung von Metallocen-Polypropylenwachsen mit einem Isotaktizitätsindex größer als 70% für Masterbatches bekannt. Nachteilig an der Verwendung eines Metallocens ist jedoch, dass zur Herstellung von isotaktischem Polypropylen spezielle racemische Isomere der Metallocene notwendig sind. Das bei den üblichen Synthesen anfallende meso-Isomer muss erst abgetrennt und danach entweder verworfen oder aber in einem weiteren Schritt in das gewünschte Racemat überführt werden.

Aus EP-A 0 896 983 sind Copolymerwachse bekannt, die mit Hilfe von Übergangsmetallkatalysatoren auf Basis von Ti, Zr oder Hf aus Vinylaromaten und Ethylen hergestellt werden und zur Dispergierung von Pigmenten in Polystyrol geeignet sind.

Weiterhin sind Polyethylenwachse mit breiter Molekulargewichtsverteilung bekannt, die durch Katalyse mit Chromocen Cp₂Cr hergestellt werden können (DE-A 100 09 114.8, publiziert am 30.8.01). Sie sind für Anwendungen in Masterbatches geeignet, aber die Brillanz reicht insbesondere für hochwertige Anwendungen nicht immer aus. Schließlich sind aus Y. Liang *et al., Organometallics* 1996, *15*, 5284 Komplexe der allgemeinen Formel A als katalytisch aktive Komponente zur Polymerisation von Ethylen bekannt, 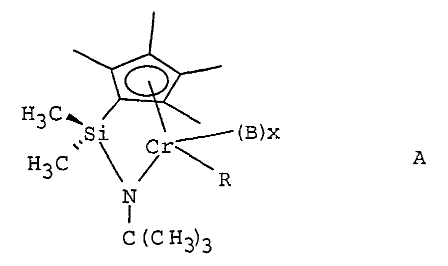 bei denen R ausgewählt wird aus Cl, CH₃, C₆H₅ oder CH₂Si(CH₃)₃, B ist eine Lewis-Base wie z.B. Tetrahydrofuran und x ist 0 oder 1. Ihre Aktivität ist jedoch zu niedrig, als dass sie technisch von Interesse sein könnten. Außerdem weisen die erhaltenen Polymere ein zu geringes Molekulargewicht auf und können nicht als Wachse für die Herstellung von Masterbatches eingesetzt werden.

Es bestand also die Aufgabe,
- Pigmentkonzentrate bereitzustellen, mit denen sich Kunststoffformkörper und Kunststoffflächengebilde einfärben lassen, die eine - verglichen mit dem Stand der Technik - verbesserte Brillanz aufweisen, ohne dass der Prozentsatz an Pigment erhöht werden muss,
- ein Verfahren zur Herstellung dieser Konzentrate bereitzustellen,
- Kunststoffformkörper und Kunststoffflächengebilde herzustellen, die mit den erfindungsgemäßen Pigmentkonzentraten eingefärbt sind, und
- ein Verfahren zum Einfärben von thermoplastischen Kunststoffen und Formkörpern mit den erfindungsgemäßen Konzentraten zu finden.

Demgemäß wurden die eingangs definierten Pigmentkonzentrate gefunden, die sich deutlich besser als Dispergiermittel in Pigmentkonzentraten verwenden lassen als konventionelle Polyolefinwachse.

Dabei enthalten die Pigmentkonzentrate ("Masterbatche") die folgenden Komponenten:
A) Mindestens ein Farbstoffpigment, wobei die Farbstoffpigmente aus anorganischen oder organischen Farbstoffpigmenten ausgewählt werden.
   Beispiele für anorganische Pigmente sind
   - Zinkweiß, Zinksulfid, Lithopone, Bleiweiß, Bleisulfat, Kreide, Titandioxid;
   - Eisenoxidgelb, Cadmiumgelb, Nickeltitangelb, Chromtitangelb, Chromgelb, Bleichromat, Bismutvanadat, Neapelgelb oder Zinkgelb
   - Ultramarinblau, Kobaltblau, Manganblau, Eisenblau,
   - Ultramaringrün, Kobaltgrün, Chromoxid (Chromoxidgrün);
   - Ultramarinviolett, Kobaltviolett, Manganviolett;
   - Ultramarinrot, Molybdatrot, Chromrot, Cadmiumrot;
   - Eisenoxidbraun, Chromeisenbraun, Zinkeisenbraun, Mangantitanbraun;
   - Eisenoxidschwarz, Eisen-Mangan-Schwarz, Spinellschwarz, Ruß;
   - orangefarbene Spinelle und Korunde, Cadmiumorange, Chromorange, Bleimolybdat;
   - Aluminium oder Cu/Zn-Legierung;

   Beispiele für organische Pigmente sind
   - Metall-Phthalocyanine wie Phthalocyaninblau oder Phthalocyaningrün, weiterhin Perylenrot, Diarylgelb, Isoindolingelb, Chinophthalon-Pigmente, Chinacridon-Pigmente, Benzimidazolon-Pigmente, Malachitgrün, Thioindigo, Monoazopigmente, Disazopigmente, verlackte Azopigmente, Naphthol AS-Pigmente, Benzimidazolon-Pigmente, Diketopyrrolopyrrole, Indanthron, Azokondensations-Pigmente, Disazokondensations-Pigmente, Anthrachinon-Pigmente, Pyrazolone, Perinone, Aminoketon-Pigmente, Indigo oder Triphenylmethan-Pigmente.

Übersichten über gängige anorganische und organische Pigmente finden sich beispielsweise in K. Leissler und G. Rösch, *Kunststoffe* 1996, *86*, 965 sowie in *Ullmann's Enyclopädie der technischen Chemie,* 4. Auflage, Stichworte: Pigmente: Einleitung; Bd. 18, S. 547 ff., Organische Pigmente, Bd. 18, S. 661 ff; Thieme Verlag Stuttgart, 1977. Es können Konzentrate mit einem Pigment, aber auch Abmischungen mit zwei, drei oder mehr verschiedenen Pigmenten hergestellt werden.
A) Polyolefinwachs, wobei es sich bei diesem Polyolefinwachs um eine wachsartige Formmasse aus mindestens einem Polyolefin handelt. Als Polyolefine werden verwendet: Polyethylen, Polypropylen, Polybut-1-en sowie Copolymere von Ethylen mit 0 bis 20 mol-% Propen, 1-Buten, 1-Penten, 1-Hexen, 1-Octen, 1-Decen oder 1-Undecen. Bevorzugt ist Polyethylenwachs mit 0 bis 10 mol-% Propen, 1-Buten, 1-Penten oder 1-Hexen. Die mittleren Molmassen M_{w} dieser Polyolefinwachse betragen von 500 bis 20.000 g, bevorzugt von 2.000 bis 10.000 g und besonders bevorzugt 3.000 bis 8.000 g. Die Q-Werte liegen im Bereich von 1,5 bis 5, bevorzugt von 1,8 bis 3,5 und besonders bevorzugt von 2 bis 3. Die Schmelzpunkte dieser Wachse betragen von 80 bis 165°C, bevorzugt von 100 bis 140°C und besonders bevorzugt von 105 bis 120°C.
B) Optional einen thermoplastischen Kunststoff als Trägerpolymer, wobei es sich bei diesem Kunststoff beispielsweise um Polyethylen, Polypropylen, Polystyrol, Polyoxymethylen, Polystyrol-Copolymere wie Styrol-Butadiencopolymere, Acrylnitril-Butadien-Styrol-Terpolymere oder Polyvinylchlorid sowie Copolymerisate von Ethylen mit 0,1 bis 20 mol-% 1-Buten, 1-Penten, 4-Methyl-1-Penten,1-Hexen, 1-Octen, 1-Decen oder 1-Undecen handelt;
C) Optional 0 bis 10 Gew.-% Zuschlagstoffe, bezogen auf die Gesamtmasse des Pigmentkonzentrats, wie Antioxidantien; bevorzugt sind Antioxidantien wie beispielsweise sterisch gehinderte Phenole oder sterisch gehinderte Amine "HALS"; ganz besonders bevorzugt sind sterisch gehinderte Phenole der Irganox®-Marken der Firma Ciba.

Die Mengenverhältnisse der verschiedenen Komponenten lassen sich in weiten Grenzen variieren. Dabei werden die Mengenverhältnisse so aneinander angepasst, dass sie sich insgesamt zu 100 Gew.-% addieren.
- Das Pigment oder die Pigmente werden in Mindestmengen von 1 Gew.-% verwendet, bevorzugt 5 Gew.-% und besonders bevorzugt 10 Gew.-%. In geringeren Anteilen wird im Allgemeinen keine ausreichende Farbstärke erzielt. Als Obergrenze sind 60 Gew.-% zu nennen, bevorzugt sind 45 Gew.-%, weil die Pigmente der teuerste Bestandteil der Pigmentkonzentrate sind.
- Das Wachs wird in Trägerpolymer-haltigen Pigmentkonzentraten zu mindestens 1 Gew.-% verwendet, bevorzugt sind mindestens 2 Gew.-%, weil unterhalb dieses Gewichtsanteils keine ausreichende Benetzung von Pigment und Trägerpolymer gewährleistet ist. In Pigmentkonzentraten, die ein Trägerpolymer enthalten, werden als Maximum vorzugsweise 30 Gew.-% Wachs verwendet und besonders bevorzugt 20 Gew.-%, weil durch zu hohe Wachsmengen im Endprodukt die mechanischen Eigenschaften des einzufärbenden Kunststoffformkörpers oder Flächengebildes leiden können. Als Obergrenze ist in solchen Pigmentkonzentraten 90 Gew.-% sinnvoll, die ohne Verwendung des Trägerpolymers hergestellt werden sollen. Als Minimum für den Wachs-Anteil eines Trägerpolymer-freien Pigmentkonzentrats sind 40 Gew.-% zu nennen, weil andernfalls das Konzentrat zu teuer wird.
- Trägerpolymere werden optional zugegeben. In den Fällen, in denen Trägerpolymer verwendet wird, wird es einem Anteil von mindestens 30 Gew.-% verwendet, weil dadurch das spätere Untermischen des Pigmentkonzentrats bei der Herstellung der Kunststoffformkörper und Kunststoffflächengebilde erleichtert wird. Als sinnvolle Obergrenze ist 80 Gew.-% anzugeben.
- Zuschlagstoffe werden nur optional und dann in geringen Mengen zugegeben. Eine sinnvolle Untergrenze für Antioxidantien wie Irganox ist 0,1 Gew.-%, weil unterhalb dieser Menge kein signifikanter Oxidationsschutz mehr möglich ist; bevorzugt sind 0,5 Gew.-% und besonders bevorzugt ist 1 Gew.-%. Als Obergrenze sind 5 Gew.-% zu nennen, weil andernfalls die Verarbeitungseigenschaften des Pigments durch die niedermolekulare Komponente sichtbar beeinträchtigt werden; bevorzugt sind 2 Gew.-% und besonders bevorzugt ist 1,5 Gew.-%. Eine weitere Klasse von Zuschlagsstoffen sind Bleisalze wie beispielsweise basisches Bleisulfat oder Bleistearat oder Mischungen derselben, die in Anteilen von jeweils 0,5 bis 2 Gew.-%, bevorzugt 1,0 bis 1,5 Gew.-% zugegeben werden.

Wachse, die sich mit Hilfe von solchen Single-Site-Katalysatoren eines Übergangsmetalls der Gruppen 5 bis 8 des Periodensystems herstellen lassen, die höchstens ein Cyclopentadienyl-System pro Übergangsmetallatom enthalten, sind als solche bekannt. Es handelt sich bei den dafür notwendigen Chromkomplexen um Verbindungen der allgemeinen Formel I a bis c.

In Formel I a 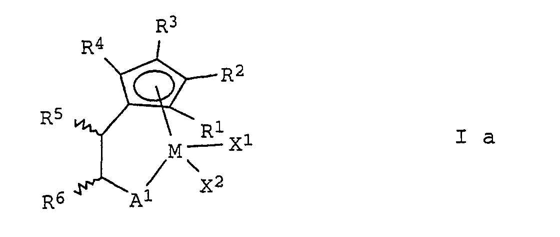 sind die Variablen wie folgt definiert:
- M: ist ein Element aus der Reihe V, Nb, Ta, Cr, Mo, W, Mn, Fe in der Oxidationsstufe +3; bevorzugt V, Cr oder Mo und besonders bevorzugt Cr;
- X¹, X²: sind ausgewählt aus
- Halogen wie Fluor, Chlor, Brom oder Jod, wobei Chlor und Brom besonders bevorzugt sind;
- Trifluoracetat,
- BF₄⁻, PF₆⁻ oder SbF₆⁻,
- C₁-C₁₈-Alkyl wie Methyl, Ethyl, n-Propyl, iso-Propyl, n-Butyl, iso-Butyl, sec.-Butyl, tert.-Butyl, n-Pentyl, iso-Pentyl, sec.-Pentyl, neo-Pentyl, 1,2-Dimethylpropyl, iso-Amyl, n-Hexyl, iso-Hexyl, sec.-Hexyl, n-Heptyl, iso-Heptyl, n-Octyl, n-Nonyl, n-Decyl, und n-Dodecyl; bevorzugt C₁-C₆-Alkyl wie Methyl, Ethyl, n-Propyl, iso-Propyl, n-Butyl, iso-Butyl, sec.-Butyl, tert.-Butyl, n-Pentyl, iso-Pentyl, sec.-Pentyl, neo-Pentyl, 1,2-Dimethylpropyl, iso-Amyl, n-Hexyl, iso-Hexyl, sec.-Hexyl, besonders bevorzugt C₁-C₄-Alkyl wie Methyl, Ethyl, n-Propyl und n-Butyl;
- C₃-C₁₂-Cycloalkyl wie Cyclopropyl, Cyclobutyl, Cyclopentyl, Cyclohexyl, Cycloheptyl, Cyclooctyl, Cyclononyl, Cyclodecyl, Cycloundecyl und Cyclododecyl; bevorzugt sind Cyclopentyl, Cyclohexyl und Cycloheptyl,
- C₇- bis C₂₀-Aralkyl, bevorzugt C₇- bis C₁₂-Phenylalkyl wie Benzyl, 1-Phenethyl, 2-Phenethyl, 1-Phenyl-propyl, 2-Phenyl-propyl, 3-Phenyl-propyl, 1-Phenyl-butyl, 2-Phenyl-butyl, 3-Phenyl-butyl und 4-Phenyl-butyl, besonders bevorzugt Benzyl,
- C₆-C₁₄-Aryl wie Phenyl, 1-Naphthyl, 2-Naphthyl, 1-Anthryl, 2-Anthryl, 9-Anthryl, 1-Phenanthryl, 2-Phenanthryl, 3-Phenanthryl, 4-Phenanthryl und 9-Phenanthryl, bevorzugt Phenyl, 1-Naphthyl und 2-Naphthyl, besonders bevorzugt Phenyl;
- C₁-C₁₂-Alkoxy, bevorzugt C₁-C₆-Alkoxy wie Methoxy, Ethoxy, n-Propoxy, iso-Propoxy, n-Butoxy, iso-Butoxy, sec.-Butoxy, tert.-Butoxy, n-Pentoxy, iso-Pentoxy, n-Hexoxy und iso-Hexoxy, besonders bevorzugt Methoxy, Ethoxy, n-Propoxy und n-Butoxy oder
- NR⁸R⁹, wobei R⁸ und R⁹ unabhängig voneinander aus Wasserstoff, C₁-C₁₂-Alkyl, C₂-C₁₂-Alkenyl und C₆-C₁₄-Aryl ausgewählt sind, die einen gesättigten oder ungesättigten 5-bis 10-gliedrigen Ring bilden können; bevorzugt sind die Dimethylamino-, die Diethylamino-, die Diisopropylamino-, die Methylphenylaminogruppe und die Diphenylaminogruppe. Beispiele für Aminogruppen mit gesättigten Ringen sind die *N*-Piperidylgruppe und die *N*-Pyrrolidinylgruppe; Beispiele für Aminogruppen mit ungesättigten Ringen sind die *N*-Pyrrylgruppe, die *N*-Indolylgruppe und die *N*-Carbazolylgruppe;

Bevorzugt sind X¹ und X² gleich, ganz besonders bevorzugt sind X¹ und X² Chlor.
R¹ bis R⁶ sind unabhängig voneinander
- Wasserstoff,
- Halogen wie Fluor, Chlor, Brom oder Jod, wobei Chlor und Brom bevorzugt sind;
- C₁-C₁₈-Alkyl wie Methyl, Ethyl, n-Propyl, iso-Propyl, n-Butyl, iso-Butyl, sec.-Butyl, tert.-Butyl, n-Pentyl, iso-Pentyl, sec.-Pentyl, neo-Pentyl, 1,2-Dimethylpropyl, iso-Amyl, n-Hexyl, iso-Hexyl, sec.-Hexyl, n-Heptyl, iso-Heptyl, n-Octyl, n-Nonyl, n-Decyl, und n-Dodecyl; bevorzugt C₁-C₆-Alkyl wie Methyl, Ethyl, n-Propyl, iso-Propyl, n-Butyl, iso-Butyl, sec.-Butyl, tert.-Butyl, n-Pentyl, iso-Pentyl, sec.-Pentyl, neo-Pentyl, 1,2-Dimethylpropyl, iso-Amyl, n-Hexyl, iso-Hexyl, sec.-Hexyl, besonders bevorzugt C₁-C₄-Alkyl wie Methyl, Ethyl, n-Propyl, iso-Propyl, n-Butyl, iso-Butyl, sec.-Butyl und tert.-Butyl,
- ein- oder mehrfach mit Donoratomen substituiertes C₁-C₁₂-Alkyl, z.B. nicht-cyclische oder cyclische Ether, Alkohole, Ketale, Thioether oder Amine; beispielsweise Methoxymethyl, Ethoxymethyl, Ethoxyethyl, β-Hydroxyethyl, ω-Ethoxypropyl, (2-Ethylhexyloxy)-propyliden, Methoxyethoxypropyliden oder ω-Dimethylaminopropyl;
- ein- oder mehrfach halogenierte C₁-C₁₂-Alkylgruppen wie Fluormethyl, Difluormethyl, Trifluormethyl, Chlormethyl, Dichlormethyl, Trichlormethyl, Brommethyl, Dibrommethyl, Tribrommethyl, Pentafluorethyl, Perfluorpropyl und Perfluorbutyl, besonders bevorzugt sind Fluormethyl, Difluormethyl, Trifluormethyl und Perfluorbutyl;
- C₂-C₁₂-Alkenyl, bevorzugt C₂- bis ω-C₈-Alkenyl wie Vinyl, Allyl, But-3-en-1-yl, ω-Pentenyl, ω-Hexenyl, ω-Heptenyl, und ω-Octenyl;
- C₃-C₁₂-Cycloalkyl wie Cyclopropyl, Cyclobutyl, Cyclopentyl, Cyclohexyl, Cycloheptyl, Cyclooctyl, Cyclononyl, Cyclodecyl, Cycloundecyl und Cyclododecyl; bevorzugt sind Cyclopentyl, Cyclohexyl und Cycloheptyl;
- C₇- bis C₂₀-Aralkyl, bevorzugt C₇- bis C₁₂-Phenylalkyl wie Benzyl, 1-Phenethyl, 2-Phenethyl, 1-Phenyl-propyl, 2-Phenyl-propyl, 3-Phenyl-propyl, 1-Phenyl-butyl, 2-Phenyl-butyl, 3-Phenyl-butyl und 4-Phenyl-butyl, besonders bevorzugt Benzyl,
- C₆-C₁₄-Aryl wie Phenyl, 1-Naphthyl, 2-Naphthyl, 1-Anthryl, 2-Anthryl, 9-Anthryl, 1-Phenanthryl, 2-Phenanthryl, 3-Phenanthryl, 4-Phenanthryl und 9-Phenanthryl, bevorzugt Phenyl, 1-Naphthyl und 2-Naphthyl, besonders bevorzugt Phenyl,
- Silyl SiR¹⁰R¹¹R¹², wobei R¹⁰ bis R¹² unabhängig voneinander aus Wasserstoff, C₁-C₁₂-Alkyl, C₇-C₁₅-Aralkyl und C₆-C₁₄-Aryl ausgewählt sind; bevorzugt sind die Trimethylsilyl-, Triethylsilyl-, Triisopropylsilyl-, Diethylisopropylsilyl-, Dimethylhexylsilyl-, tert.-Butyldimethylsilyl-, tert.-Butyldiphenylsilyl-, Tribenzylsilyl-, Triphenylsilyl- und die Tri-para-xylylsilylgruppe; besonders bevorzugt sind die Trimethylsilylgruppe und die tert.-Butyldimethylsilylgruppe;
- Siloxy OSiR¹⁰R¹¹R¹², wobei R¹⁰ bis R¹² unabhängig voneinander aus Wasserstoff, C₁-C₁₂-Alkyl, C₇-C₁₅-Aralkyl und C₆-C₁₄-Aryl ausgewählt sind; bevorzugt sind die Trimethylsilyloxy-, Triethylsilyloxy-, Triisopropylsilyloxy-, Diethylisopropylsilyloxy-, Dimethylhexylsilyloxy-, tert.-Butyldimethylsilyloxy-, tert.-Butyldiphenylsilyloxy-, Tribenzylsilyloxy-, Triphenylsilyloxy- und die Tri-para-xylylsilyloxygruppe; besonders bevorzugt sind die Trimethylsilyloxygruppe und die tert.-Butyldimethylsilyloxygruppe;
- C₁-C₁₂-Alkoxy, bevorzugt C₁-C₆-Alkoxy wie Methoxy, Ethoxy, n-Propoxy, iso-Propoxy, n-Butoxy, iso-Butoxy, sec.-Butoxy, tert.-Butoxy, n-Pentoxy, iso-Pentoxy, n-Hexoxy und iso-Hexoxy, besonders bevorzugt Methoxy, Ethoxy, n-Propoxy und n-Butoxy;
- C₆-C₁₄-Aryl, das seinerseits substituiert ist mit einem oder mehreren C₁-C₁₂-Alkyl, C₁-C₁₂-Alkenyl, C₃-C₁₂-Cycloalkyl, C₆-C₁₄-Aryl, Silyl SiR¹⁰R¹¹R¹², Siloxy OSiR¹⁰R¹¹R¹² oder C₁-C₁₂-Alkoxy, wobei diese Gruppen wie oben spezifiziert sind;
- ist unter A¹ O-R¹³, S-R¹³ Schwefel, N(R¹³)₂ oder P(R¹³)₂ zu verstehen, wobei R¹³ ausgewählt wird aus Halogen, C₁-C₁₂-Alkyl, C₃-C₁₂-Cycloalkyl, C₂-C₁₂-Alkenyl, substituierten oder unsubstituierten C₆-C₁₄-Arylgruppen oder C₁-C₁₂-Alkoxygruppen und wobei diese Gruppen wie bei R¹ bis R⁶ definiert sind.

In einer besonderen Ausführungsform der vorliegenden Erfindung können zwei benachbarte Reste miteinander unter Einbeziehung des Stammaromaten einen 5- bis 10-gliedrigen Ring bilden. So können beispielsweise in Formel I a R³ und R⁴ zusammen sein: -(CH₂)₃- (Trimethylen), -(CH₂)₄- (Tetramethylen) (CH₂)₅- (Pentamethylen), -(CH₂)₆- (Hexamethylen),
-CH₂-CH=CH-, -CH₂-CH=CH-CH₂-, -CH=CH-CH=CH-, -O-CH₂-O-, O-CH(CH₃)-O-,
-O-CH-(C₆H₅)-O-, -O-CH₂-CH₂-O-, -O-C(CH₃)₂-O-, -NCH₃-CH₂-CH₂-NCH₃-, -NCH₃-CH₂-NCH₃- oder -O-Si(CH₃)₂-O-.

In einer weiteren Ausführungsform der vorliegenden Erfindung werden als katalytisch aktive Komponenten Verbindungen der allgemeinen Formel I b verwendet.

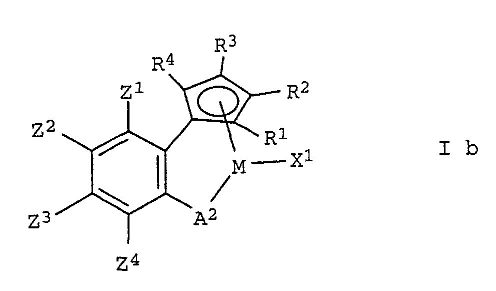

In Formel I b sind die Variablen wie folgt definiert:
Z¹ bis Z⁴ sind unabhängig voneinander
   - Wasserstoff,
   - Halogen wie Fluor, Chlor, Brom oder Jod, wobei Chlor und Brom bevorzugt sind;
   - C₁-C₁₈-Alkyl wie Methyl, Ethyl, n-Propyl, iso-Propyl, n-Butyl, iso-Butyl, sec.-Butyl, tert.-Butyl, n-Pentyl, iso-Pentyl, sec.-Pentyl, neo-Pentyl, 1,2-Dimethylpropyl, iso-Amyl, n-Hexyl, iso-Hexyl, sec.-Hexyl, n-Heptyl, iso-Heptyl, n-Octyl, n-Nonyl, n-Decyl, und n-Dodecyl; bevorzugt C₁-C₆-Alkyl wie Methyl, Ethyl, n-Propyl, iso-Propyl, n-Butyl, iso-Butyl, sec.-Butyl, tert.-Butyl, n-Pentyl, iso-Pentyl, sec.-Pentyl, neo-Pentyl, 1,2-Dimethylpropyl, iso-Amyl, n-Hexyl, iso-Hexyl, sec.-Hexyl, besonders bevorzugt C₁-C₄-Alkyl wie Methyl, Ethyl, n-Propyl, iso-Propyl, n-Butyl, iso-Butyl, sec.-Butyl und tert.-Butyl,
   - ein- oder mehrfach mit Donoratomen substituiertes C₁-C₁₂-Alkyl, z.B. nicht-cyclische oder cyclische Ether, Alkohole; Ketale, Thioether oder Amine; beispielsweise Methoxymethyl, Ethoxymethyl, Ethoxyethyl, β-Hydroxyethyl, ω-Ethoxypropyl, (2-Ethylhexyloxy)-propyliden, Methoxyethoxypropyliden oder ω-Dimethylaminopropyl;
   - ein- oder mehrfach halogenierte C₁-C₁₂-Alkylgruppen wie Fluormethyl, Difluormethyl, Trifluormethyl, Chlormethyl, Dichlormethyl, Trichlormethyl, Brommethyl, Dibrommethyl, Tribrommethyl, Pentafluorethyl, Perfluorpropyl und Perfluorbutyl, besonders bevorzugt sind Fluormethyl, Difluormethyl, Trifluormethyl und Perfluorbutyl;
   - C₂-C₁₂-Alkenyl, bevorzugt C₂- bis ω-C₈-Alkenyl wie Vinyl, Allyl, But-3-en-1-yl, ω-Pentenyl, ω-Hexenyl, ω-Heptenyl, und ω-Octenyl;
   - C₃-C₁₂-Cycloalkyl wie Cyclopropyl, Cyclobutyl, Cyclopentyl, Cyclohexyl, Cycloheptyl, Cyclooctyl, Cyclononyl, Cyclodecyl, Cycloundecyl und Cyclododecyl; bevorzugt sind Cyclopentyl, Cyclohexyl und Cycloheptyl;
   - C₇- bis C₂₀-Aralkyl, bevorzugt C₇- bis C₁₂-Phenylalkyl wie Benzyl, 1-Phenethyl, 2-Phenethyl, 1-Phenyl-propyl, 2-Phenyl-propyl, 3-Phenyl-propyl, 1-Phenyl-butyl, 2-Phenyl-butyl, 3-Phenyl-butyl und 4-Phenyl-butyl, besonders bevorzugt Benzyl,
   - C₆-C₁₄-Aryl wie Phenyl, 1-Naphthyl, 2-Naphthyl, 1-Anthryl, 2-Anthryl, 9-Anthryl, 1-Phenanthryl, 2-Phenanthryl, 3-Phenanthryl, 4-Phenanthryl und 9-Phenanthryl, bevorzugt Phenyl, 1-Naphthyl und 2-Naphthyl, besonders bevorzugt Phenyl,
   - Silyl SiR¹⁰R¹¹R¹², wobei R¹⁰ bis R¹² unabhängig voneinander aus Wasserstoff, C₁-C₁₂-Alkyl, C₇-C₁₅-Aralkyl und C₆-C₁₄-Aryl ausgewählt sind; bevorzugt sind die Trimethylsilyl-, Triethylsilyl-, Triisopropylsilyl-, Diethylisopropylsilyl-, Dimethylhexylsilyl-, tert.-Butyldimethylsilyl-, tert.-Butyldiphenylsilyl-, Tribenzylsilyl-, Triphenylsilyl- und die Tri-para-xylylsilylgruppe; besonders bevorzugt sind die Trimethylsilylgruppe und die tert.-Butyldimethylsilylgruppe;
   - Siloxy OSiR¹⁰R¹¹R¹², wobei R¹⁰ bis R¹² unabhängig voneinander aus Wasserstoff, C₁-C₁₂-Alkyl, C₇-C₁₅-Aralkyl und C₆-C₁₄-Aryl ausgewählt sind; bevorzugt sind die Trimethylsilyloxy-, Triethylsilyloxy-, Triisopropylsilyloxy-, Diethylisopropylsilyloxy-, Dimethylhexylsilyloxy-, tert.-Butyldimethylsilyloxy-, tert.-Butyldiphenylsilyloxy-, Tribenzylsilyloxy-, Triphenylsilyloxy- und die Tri-para-xylylsilyloxygruppe; besonders bevorzugt sind die Trimethylsilyloxygruppe und die tert.-Butyldimethylsilyloxygruppe;
   - C₁-C₁₂-Alkoxy, bevorzugt C₁-C₆-Alkoxy wie Methoxy, Ethoxy, n-Propoxy, iso-Propoxy, n-Butoxy, iso-Butoxy, sec.-Butoxy, tert.-Butoxy, n-Pentoxy, iso-Pentoxy, n-Hexoxy und iso-Hexoxy, besonders bevorzugt Methoxy, Ethoxy, n-Propoxy und n-Butoxy;
   - C₆-C₁₄-Aryl, das seinerseits substituiert ist mit einem oder mehreren C₁-C₁₂-Alkyl, C₁-C₁₂-Alkenyl, C₃-C₁₂-Cycloalkyl, C₆-C₁₄-Aryl, Silyl SiR¹⁰R¹¹R¹², Siloxy OSiR¹⁰R¹¹R²² oder C₁-C₁₂-Alkoxy, wobei diese Gruppen wie oben spezifiziert sind;
   - A² ist ausgewählt aus Sauerstoff, Schwefel, N-R¹³ oder P-R¹³, bevorzugt N-R¹³ oder P-R¹³, wobei R¹³ wie oben spezifiziert ist.

In einer besonderen Ausführungsform der vorliegenden Erfindung können zwei benachbarte Reste miteinander unter Einbeziehung des Stammaromaten einen 5- bis 10-gliedrigen Ring bilden. So können beispielsweise in Formel I b R³ und R⁴ oder Z¹ und Z² zusammen sein:
-(CH₂)₃- (Trimethylen), -(CH₂)₄- (Tetramethylen), -(CH₂)₅- (Pentamethylen), -(CH₂)₆- (Hexamethylen), -CH₂-CH=CH-, -CH₂-CH=CH-CH₂-, -CH=CH-CH=CH-, -O-CH₂-O-, -O-CH(CH₃)-O-, -O-CH-(C₆H₅)-O-, -O-CH₂-CH₂-O-, -O-C(CH₃)₂-O-, -NCH₃-CH₂-CH₂-NCH₃-, -NCH₃-CH₂-NCH₃- oder -O-Si(CH₃)₂-O-.

In einer weiteren besonderen Ausführungsform können Z⁴ und A² miteinander unter Einbeziehung des Stammaromaten einen 5- bis 10-gliedrigen Ring bilden.

In einer weiteren bevorzugten Ausführungsform bilden Z⁴ und A² unter Einbeziehung des Stammaromaten ein Indolsystem.

Die übrigen Variablen sind wie in Formel I a definiert.

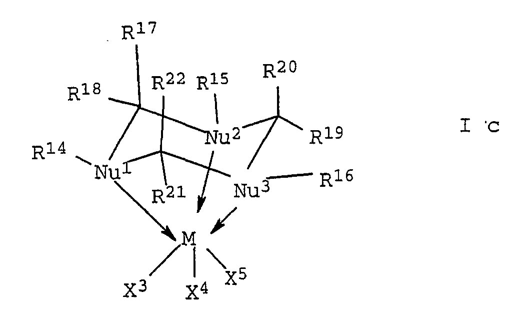

In Formel I c
sind die Variablen wie folgt definiert:
- X³, X⁴ und X⁵ sind unabhängig voneinander
   - Halogen wie Fluor, Chlor, Brom oder Jod, wobei Chlor und Brom besonders bevorzugt sind;
   - Trifluoracetat,
   - BF₄⁻, PF₆⁻ oder SbF₆⁻,
   - C₁-C₁₈-Alkyl wie Methyl, Ethyl, n-Propyl, iso-Propyl, n-Butyl, iso-Butyl, sec.-Butyl, tert.-Butyl, n-Pentyl, iso-Pentyl, sec.-Pentyl, neo-Pentyl, 1,2-Dimethylpropyl, iso-Amyl, n-Hexyl, iso-Hexyl, sec.-Hexyl, n-Heptyl, iso-Heptyl, n-Octyl, n-Nonyl, n-Decyl, und n-Dodecyl; bevorzugt C₁-C₆-Alkyl wie Methyl, Ethyl, n-Propyl, iso-Propyl, n-Butyl, iso-Butyl, sec.-Butyl, tert.-Butyl, n-Pentyl, iso-Pentyl, sec.-Pentyl, neo-Pentyl, 1,2-Dimethylpropyl, iso-Amyl, n-Hexyl, iso-Hexyl, sec.-Hexyl, besonders bevorzugt C₁-C₄-Alkyl wie Methyl, Ethyl, n-Propyl und n-Butyl;
   - C₃-C₁₂-Cycloalkyl wie Cyclopropyl, Cyclobutyl, Cyclopentyl, Cyclohexyl, Cycloheptyl, Cyclooctyl, Cyclononyl, Cyclodecyl, Cycloundecyl und Cyclododecyl; bevorzugt sind Cyclopentyl, Cyclohexyl und Cycloheptyl,
   - C₇- bis C₂₀-Aralkyl, bevorzugt C₇- bis C₁₂-Phenylalkyl wie Benzyl, 1-Phenethyl, 2-Phenethyl, 1-Phenyl-propyl, 2-Phenyl-propyl, 3-Phenyl-propyl, 1-Phenyl-butyl, 2-Phenyl-butyl, 3-Phenyl-butyl und 4-Phenyl-butyl, besonders bevorzugt Benzyl,
   - C₆-C₁₄-Aryl wie Phenyl, 1-Naphthyl, 2-Naphthyl, 1-Anthryl, 2-Anthryl, 9-Anthryl, 1-Phenanthryl, 2-Phenanthryl, 3-Phenanthryl, 4-Phenanthryl und 9-Phenanthryl, bevorzugt Phenyl, 1-Naphthyl und 2-Naphthyl, besonders bevorzugt Phenyl;
   - C₁-C₁₂-Alkoxy, bevorzugt C₁-C₆-Alkoxy wie Methoxy, Ethoxy, n-Propoxy, iso-Propoxy, n-Butoxy, iso-Butoxy, sec.-Butoxy, tert.-Butoxy, n-Pentoxy, iso-Pentoxy, n-Hexoxy und iso-Hexoxy, besonders bevorzugt Methoxy, Ethoxy, n-Propoxy und n-Butoxy oder
   - NR⁸R⁹, wobei R⁸ und R⁹ unabhängig voneinander aus Wasserstoff, C₁-C₂₂-Alkyl, C₂-C₁₂-Alkenyl und C₆-C₁₄-Aryl ausgewählt sind, die einen gesättigten oder ungesättigten 5-bis 10-gliedrigen Ring bilden können; bevorzugt sind die Dimethylamino-, die Diethylamino-, die Diisopropylamino-, die Methylphenylaminogruppe und die Diphenylaminogruppe. Beispiele für Aminogruppen mit gesättigten Ringen sind die *N*-Piperidylgruppe und die *N*-Pyrrolidinylgruppe; Beispiele für Aminogruppen mit ungesättigten Ringen sind die *N*-Pyrrylgruppe, die *N*-Indolylgruppe und die *N*-Carbazolylgruppe;

Bevorzugt sind X³ bis X⁵ gleich, ganz besonders bevorzugt sind X³ bis X⁵ Chlor.
- Nu¹ bis Nu³ sind unabhängig voneinander ausgewählt aus N oder P, bevorzugt sind Nu¹ und Nu² jeweils N und besonders bevorzugt sind Nu¹ bis Nu³ jeweils N.
- R¹⁴ bis R¹⁶ sind unabhängig voneinander
   - Wasserstoff,
   - Halogen wie Fluor, Chlor, Brom oder Jod, wobei Chlor und Brom bevorzugt sind;
   - C₁-C₁₈-Alkyl wie Methyl, Ethyl, n-Propyl, iso-Propyl, n-Butyl, iso-Butyl, sec.-Butyl, tert.-Butyl, n-Pentyl, iso-Pentyl, sec.-Pentyl, neo-Pentyl, 1,2-Dimethylpropyl, iso-Amyl, n-Hexyl, iso-Hexyl, sec.-Hexyl, n-Heptyl, iso-Heptyl, n-Octyl, n-Nonyl, n-Decyl, und n-Dodecyl; bevorzugt C₁-C₆-Alkyl wie Methyl, Ethyl, n-Propyl, iso-Propyl, n-Butyl, iso-Butyl, sec.-Butyl, tert.-Butyl, n-Pentyl, iso-Pentyl, sec.-Pentyl, neo-Pentyl, 1,2-Dimethylpropyl, iso-Amyl, n-Hexyl, iso-Hexyl, sec.-Hexyl, besonders bevorzugt C₁-C₄-Alkyl wie Methyl, Ethyl, n-Propyl, iso-Propyl, n-Butyl, iso-Butyl, sec.-Butyl und tert.-Butyl,
   - ein- oder mehrfach mit Donoratomen substituiertes C₁-C₁₂-Alkyl, z.B. nicht-cyclische oder cyclische Ether, Alkohole, Ketale, Thioether oder Amine; beispielsweise Methoxymethyl, Ethoxymethyl, Ethoxyethyl, β-Hydroxyethyl, ω-Ethoxypropyl, (2-Ethylhexyloxy)-propyliden, Methoxyethoxypropyliden oder ω-Dimethylaminopropyl;
   - ein- oder mehrfach halogenierte C₁-C₁₂-Alkylgruppen wie Fluormethyl, Difluormethyl, Trifluormethyl, Chlormethyl, Dichlormethyl, Trichlormethyl, Brommethyl, Dibrommethyl, Tribrommethyl, Pentafluorethyl, Perfluorpropyl und Perfluorbutyl, besonders bevorzugt sind Fluormethyl, Difluormethyl, Trifluormethyl und Perfluorbutyl;
   - C₂-C₁₂-Alkenyl, bevorzugt C₂- bis ω-C₈-Alkenyl wie Vinyl, Allyl, But-3-en-1-yl, ω-Pentenyl, ω-Hexenyl, ω-Heptenyl, und ω-Octenyl;
   - C₃-C₁₂-Cycloalkyl wie Cyclopropyl, Cyclobutyl, Cyclopentyl, Cyclohexyl, Cycloheptyl, Cyclooctyl, Cyclononyl, Cyclodecyl, Cycloundecyl und Cyclododecyl; bevorzugt sind Cyclopentyl, Cyclohexyl und Cycloheptyl;
   - C₇- bis C₂₀-Aralkyl, bevorzugt C₇- bis C₁₂-Phenylalkyl wie Benzyl, 1-Phenethyl, 2-Phenethyl, 1-Phenyl-propyl, 2-Phenyl-propyl, 3-Phenyl-propyl, 1-Phenyl-butyl, 2-Phenyl-butyl, 3-Phenyl-butyl und 4-Phenyl-butyl, besonders bevorzugt Benzyl,
   - C₆-C₁₄-Aryl wie Phenyl, 1-Naphthyl, 2-Naphthyl, 1-Anthryl, 2-Anthryl, 9-Anthryl, 1-Phenanthryl, 2-Phenanthryl, 3-Phenanthryl, 4-Phenanthryl und 9-Phenanthryl, bevorzugt Phenyl, 1-Naphthyl und 2-Naphthyl, besonders bevorzugt Phenyl,
   - Silyl SiR¹⁰R¹¹R¹², wobei R¹⁰ bis R¹² unabhängig voneinander aus Wasserstoff, C₁-C₁₂-Alkyl, C₇-C₁₅-Aralkyl und C₆-C₁₄-Aryl ausgewählt sind; bevorzugt sind die Trimethylsilyl-, Triethylsilyl-, Triisopropylsilyl-, Diethylisopropylsilyl-, Dimethylhexylsilyl-, tert.-Butyldimethylsilyl-, tert.-Butyldiphenylsilyl-, Tribenzylsilyl-, Triphenylsilyl- und die Tri-para-xylylsilylgruppe; besonders bevorzugt sind die Trimethylsilylgruppe und die tert.-Butyldimethylsilylgruppe;
   - Siloxy OSiR¹⁰R¹¹R¹², wobei R¹⁰ bis R¹² unabhängig voneinander aus Wasserstoff, C₁-C₁₂-Alkyl, C₇-C₁₅-Aralkyl und C₆-C₁₄-Aryl ausgewählt sind; bevorzugt sind die Trimethylsilyloxy-, Triethylsilyloxy-, Triisopropylsilyloxy-, Diethylisopropylsilyloxy-, Dimethylhexylsilyloxy-, tert.-Butyldimethylsilyloxy-, tert.-Butyldiphenylsilyloxy-, Tribenzylsilyloxy-, Triphenylsilyloxy- und die Tri-para-xylylsilyloxygruppe; besonders bevorzugt sind die Trimethylsilyloxygruppe und die tert.-Butyldimethylsilyloxygruppe;
   - C₁-C₁₂-Alkoxy, bevorzugt C₁-C₆-Alkoxy wie Methoxy, Ethoxy, n-Propoxy, iso-Propoxy, n-Butoxy, iso-Butoxy, sec.-Butoxy, tert.-Butoxy, n-Pentoxy, iso-Pentoxy, n-Hexoxy und iso-Hexoxy, besonders bevorzugt Methoxy, Ethoxy, n-Propoxy und n-Butoxy;
   - C₆-C₁₄-Aryl, das seinerseits substituiert ist mit einem oder mehreren C₁-C₁₂-Alkyl, C₁-C₁₂-Alkenyl, C₃-C₁₂-Cycloalkyl, C₆-C₁₄-Aryl, Silyl SiR¹⁰R¹¹R¹², Siloxy OSiR¹⁰R¹¹R¹² oder C₁-C₁₂-Alkoxy, wobei diese Gruppen wie oben spezifiziert sind;

Bevorzugt sind R¹⁴ bis R¹⁶ gleich.
R¹⁷ bis R²² sind unabhängig voneinander
- Wasserstoff,
- C₁-C₁₈-Alkyl wie Methyl, Ethyl, n-Propyl, iso-Propyl, n-Butyl, iso-Butyl, sec.-Butyl, tert.-Butyl, n-Pentyl, iso-Pentyl, sec.-Pentyl, neo-Pentyl, 1,2-Dimethylpropyl, iso-Amyl, n-Hexyl, iso-Hexyl, sec.-Hexyl, n-Heptyl, iso-Heptyl, n-Octyl, n-Nonyl, n-Decyl, und n-Dodecyl; bevorzugt C₁-C₆-Alkyl wie Methyl, Ethyl, n-Propyl, iso-Propyl, n-Butyl, iso-Butyl, sec.-Butyl, tert.-Butyl, n-Pentyl, iso-Pentyl, sec.-Pentyl, neo-Pentyl, 1,2-Dimethylpropyl, iso-Amyl, n-Hexyl, iso-Hexyl, sec.-Hexyl, besonders bevorzugt C₁-C₄-Alkyl wie Methyl, Ethyl, n-Propyl, iso-Propyl, n-Butyl, iso-Butyl, sec.-Butyl und tert.-Butyl,
- ein- oder mehrfach halogeniertes C₁-C₁₂-Alkyl wie Fluormethyl, Difluormethyl, Trifluormethyl, Chlormethyl, Dichlormethyl, Trichlormethyl, Brommethyl, Dibrommethyl, Tribrommethyl, Pentafluorethyl, Perfluorpropyl und Perfluorbutyl, besonders bevorzugt sind Fluormethyl, Difluormethyl, Trifluormethyl und Perfluorbutyl;
- ein- oder mehrfach mit Donoratomen substituiertes C₁-C₁₂-Alkyl, z.B. nicht-cyclische oder cyclische Ether, Alkohole, Ketale, Thioether oder Amine; beispielsweise Methoxymethyl, Ethoxymethyl, Ethoxyethyl, β-Hydroxyethyl, ω-Ethoxypropyl, (2-Ethylhexyloxy)-propyliden, Methoxyethoxypropyliden oder ω-Dimethylaminopropyl;
- C₂-C₁₂-Alkenyl, bevorzugt C₂- bis ω-C₈-Alkenyl wie Vinyl, Allyl, But-3-en-1-yl, ω-Pentenyl, ω-Hexenyl, ω-Heptenyl, und ω-Octenyl;
- C₃-C₁₂-Cycloalkyl wie Cyclopropyl, Cyclobutyl, Cyclopentyl, Cyclohexyl, Cycloheptyl, Cyclooctyl, Cyclononyl, Cyclodecyl, Cycloundecyl und Cyclododecyl; bevorzugt sind Cyclopentyl, Cyclohexyl und Cycloheptyl;
- C₇- bis C₂₀-Aralkyl, bevorzugt C₇- bis C₁₂-Phenylälkyl wie Benzyl, 1-Phenethyl, 2-Phenethyl, 1-Phenyl-propyl, 2-Phenyl-propyl, 3-Phenyl-propyl, 1-Phenyl-butyl, 2-Phenyl-butyl, 3-Phenyl-butyl und 4-Phenyl-butyl, besonders bevorzugt Benzyl,
- C₆-C₁₄-Aryl wie Phenyl, 1-Naphthyl, 2-Naphthyl, 1-Anthryl, 2-Anthryl, 9-Anthryl, 1-Phenanthryl, 2-Phenanthryl, 3-Phenanthryl, 4-Phenanthryl und 9-Phenanthryl, bevorzugt Phenyl, 1-Naphthyl und 2-Naphthyl, besonders bevorzugt Phenyl,
- Silyl SiR¹⁰R¹¹R¹², wobei R¹⁰ bis R¹² unabhängig voneinander aus Wasserstoff, C₁-C₁₂-Alkyl, C₇-C₁₅-Aralkyl und C₆-C₁₄-Aryl ausgewählt sind; bevorzugt sind die Trimethylsilyl-, Triethylsilyl-, Triisopropylsilyl-, Diethylisopropylsilyl-, Dimethylhexylsilyl-, tert.-Butyldimethylsilyl-, tert.-Butyldiphenylsilyl-, Tribenzylsilyl-, Triphenylsilyl- und die Tri-para-xylylsilylgruppe; besonders bevorzugt sind die Trimethylsilylgruppe und die tert.-Butyldimethylsilylgruppe;
- Siloxy OSiR¹⁰R¹¹R¹², wobei R¹⁰ bis R¹² unabhängig voneinander aus Wasserstoff, C₁-C₁₂-Alkyl, C₇-C₁₅-Aralkyl und C₆-C₁₄-Aryl ausgewählt sind; bevorzugt sind die Trimethylsilyloxy-, Triethylsilyloxy-, Triisopropylsilyloxy-, Diethylisopropylsilyloxy-, Dimethylhexylsilyloxy-, tert.-Butyldimethylsilyloxy-, tert.-Butyldiphenylsilyloxy-, Tribenzylsilyloxy-, Triphenylsilyloxy- und die Tri-para-xylylsilyloxygruppe; besonders bevorzugt sind die Trimethylsilyloxygruppe und die tert.-Butyldimethylsilyloxygruppe;
- C₁-C₁₂-Alkoxy, bevorzugt C₁-C₆-Alkoxy wie Methoxy, Ethoxy, n-Propoxy, iso-Propoxy, n-Butoxy, iso-Butoxy, sec.-Butoxy, tert.-Butoxy, n-Pentoxy, iso-Pentoxy, n-Hexoxy und iso-Hexoxy, besonders bevorzugt Methoxy, Ethoxy, n-Propoxy und n-Butoxy;
- C₆-C₁₄-Aryl, die ihrerseits substituiert sind mit einem oder mehreren C₁-C₁₂-Alkyl, C₁-C₁₂-Alkenyl, C₃-C₁₂-Cycloalkyl, C₆-C₁₄-Aryl, Silyl SiR¹⁰R¹¹R¹², Siloxy OSiR¹⁰R¹¹R¹² oder C₁-C₁₂-Alkoxy, wobei diese Gruppen wie oben spezifiziert sind;

Bevorzugt sind R¹⁷, R¹⁹ und R²¹ jeweils gleich, und bevorzugt sind R¹⁸, R²⁰ und R²² jeweils Wasserstoff. Ganz besonders bevorzugt sind R¹⁷ bis R²² Wasserstoff. Die zur Synthese dieser ganz besonders bevorzugten Verbindungen notwendigen Triazacyclohexan-Liganden lassen sich besonders gut synthetisieren.

In einer besonderen Ausführungsform der allgemeinen Formel I c können zwei benachbarte Reste gemeinsam einen gesättigten oder ungesättigten 4- bis 9-gliedrigen Ring bilden können, beispielsweise können zwei Reste zusammen sein: C₃-C₉-Alkyliden wie beispielsweise -(CH₂)₃- (Trimethylen), -(CH₂)₄- (Tetramethylen), -(CH₂)₅- (Pentamethylen), -(CH₂)₆- (Hexamethylen), -CH₂-CH=CH-, -CH₂-CH=CH-CH₂-, -CH=CH-CH=CH-; weiterhin cyclische Aldole, Ketale oder Amine wie beispielsweise -O-CH₂-O-, -O-CH(CH₃)-O-, -O-CH-(C₆H₅)-O-,
-O-CH₂-CH₂-O-, -O-C(CH₃)₂-O-, -N(CH₃)-CH₂-CH₂-N(CH₃)-, -N(CH₃)-CH₂-N(CH₃)- oder
-O-Si(CH₃)₂-O-.

Die übrigen Variablen sind wie in Formel I a definiert.

Die Herstellung der Übergangsmetallkomplexe der allgemeinen Formel I a bis c ist an sich bekannt. Geeignete Synthesen für Komplexe der allgemeinen Formel I a und b finden sich in DE-A 197 10 615, bei A. Döhring *et al.*, *Organometallics* 2000, *19*, 388 und bei J.C.Weber, Dissertation MPI Mülheim/Ruhr, 1999.

Die Herstellung der besonders bevorzugten Triazacycloalkan-Liganden für Komplexe der allgemeinen Formel I c ist an sich bekannt. Die zur Synthese der ganz besonders bevorzugten Verbindungen der allgemeinen Formel I c, bei denen R¹⁷ bis R²² jeweils Wasserstoff und die Reste R¹⁴ bis R¹⁶ jeweils gleich sind, lassen sich ganz besonders gut durch Vermischen von Formaldehyd beispielsweise in der Form von Formalin-Lösung und dem zugehörigen Amin R¹⁴-NH₂ synthetisieren. Verschiedene Synthesewege für diese Komplexliganden werden z.B. beschrieben in F. Weitl, *et al. J. Am. Chem. Soc.* 1979, *101* 2728; M. Takahashi, S. Takamoto, *Bull. Chem. Soc. Japan* 1977, *50,* 3413; T. Arishima *et al.*, *Nippon Kagaku Kaishi* 1973, 1119; L. Christiansen *et al. Inorg. Chem.* 1986, *25,* 2813; L.R. Gahan *et al., Aust. J. Chem.* 1982, *35*, 1119; B.A. Sayer *et al.*, *Inorg. Chim. Acta,* 1983, *77*, L63; K Wieghardt *et al., Z. Naturforsch.,* 1983, *38b,* 81 und I.A. Fallis et al., *J. Chem. Soc., Chem. Commun.* 1998, 665.

Die Metallkomplexe, insbesondere die Chromkomplexe, lassen sich auf einfache Weise erhalten, wenn man die entsprechenden Metallsalze wie z.B. Metallchloride oder Metallcarbonyle mit dem Liganden umsetzt, z. B. in P. Chaudhuri, K. Wieghardt, *Prog. Inorg. Chem.* 1987, *35,* 329 oder G. P. Stahley *et al.*, *Acta Crystall.* 1995, *C51,* 18.

Damit vorstehende Komplexe der allgemeinen Formeln I a bis c katalytisch aktiv sind, werden sie mit einer Kationen-bildenden Verbindung aktiviert. Geeignete Kationen-bildenden Verbindungen sind ausgewählte Aluminium- oder Bor-Verbindungen mit elektronenziehenden Resten (z.B. Trispentafluorphenylboran, Trispentafluorphenylaluminium, *N,N*-Dimethylanilinium-tetrakis-pentafluorphenylborat, Tri-n-butylammonium-tetrakis-pentafluorphenylborat, *N,N*-Dimethylanilinium-tetrakis-(3,5-bisperfluormethyl)-phenylborat, Tri-n-butylammonium-tetrakis-(3,5-bisperfluormethyl)-phenylborat sowie Tritylium-tetrakispentafluorphenylborat). Diese Aktivatoren für Komplexe der allgemeinen Formeln I a bis c sind in DE-A 199 35 407 in PCT/EP 0002716 [WO 00/5837 (A1)] bzw. in Angew. Chem. Int. Ed., 1994, Band 33, S. 1877 beschrieben. Bevorzugt sind Dimethylanilinium-tetrakis-pentafluorphenylborat, Tritylium-tetrakispentafluorphenylborat sowie Trispentafluorphenylboran.

Verwendet man Bor- oder Aluminiumverbindungen als Aktivatoren für die Komplexe der allgemeinen Formel I a bis c, so setzt man sie im Allgemeinen in einem molaren Verhältnis von 1:10 bis 10:1, bezogen auf M, ein; bevorzugt 1:2 bis 5:1 und besonders bevorzugt 1:1,5 bis 1,5:1.

Eine andere geeignete Klasse Kationen-bildender Verbindungen sind die Aluminoxane der allgemeinen Formel II a bis b.

Die Struktur der Aluminoxane ist nicht genau bekannt. Es handelt sich bei ihnen um Produkte, die durch vorsichtige partielle Hydrolyse von Aluminiumalkylen erhalten werden (s. DE-A 30 07 725). Diese Produkte liegen nicht rein vor, sondern als Gemische von offenkettigen und cyclischen Strukturen des Typs II a und b. Diese Gemische liegen vermutlich in einem dynamischen Gleichgewicht zueinander vor.

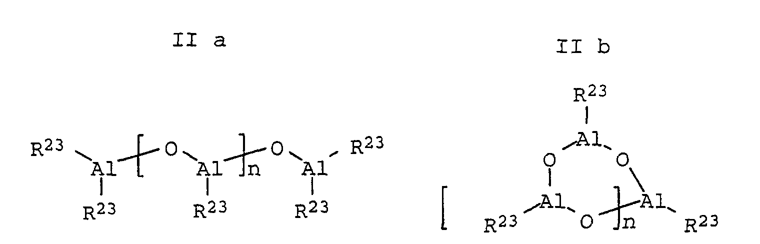

In Formel II a und b sind die Reste R²³ unabhängig voneinander
- C₁-C₁₂-Alkyl wie Methyl, Ethyl, n-Propyl, iso-Propyl, n-Butyl, iso-Butyl, sec.-Butyl, tert.-Butyl, n-Pentyl, iso-Pentyl, sec.-Pentyl, neo-Pentyl, 1,2-Dimethylpropyl, iso-Amyl, n-Hexyl, iso-Hexyl, sec.-Hexyl, n-Heptyl, iso-Heptyl, n-Octyl, n-Nonyl, n-Decyl, und n-Dodecyl; bevorzugt C₁-C₆-Alkyl wie Methyl, Ethyl, n-Propyl, iso-Propyl, n-Butyl, iso-Butyl, sec.-Butyl, tert.-Butyl, n-Pentyl, iso-Pentyl, sec.-Pentyl, neo-Pentyl, 1,2-Dimethylpropyl, iso-Amyl, n-Hexyl, iso-Hexyl, sec.-Hexyl, besonders bevorzugt ist Methyl;
- C₃-C₁₂-Cycloalkyl wie Cyclopropyl, Cyclobutyl, Cyclopentyl, Cyclohexyl, Cycloheptyl, Cyclooctyl, Cyclononyl, Cyclodecyl, Cycloundecyl und Cyclododecyl; bevorzugt sind Cyclopentyl, Cyclohexyl und Cycloheptyl;
- C₇- bis C₂₀-Aralkyl, bevorzugt C₇- bis C₁₂-Phenylalkyl wie Benzyl, 1-Phenethyl, 2-Phenethyl, 1-Phenyl-propyl, 2-Phenyl-propyl, 3-Phenyl-propyl, 1-Phenyl-butyl, 2-Phenyl-butyl, 3-Phenyl-butyl und 4-Phenyl-butyl, besonders bevorzugt Benzyl, oder
- C₆-C₁₄-Aryl wie Phenyl, 1-Naphthyl, 2-Naphthyl, 1-Anthryl, 2-Anthryl, 9-Anthryl, 1-Phenanthryl, 2-Phenanthryl, 3-Phenanthryl, 4-Phenanthryl und 9-Phenanthryl, bevorzugt Phenyl, 1-Naphthyl und 2-Naphthyl, besonders bevorzugt Phenyl; und

- n: ist eine ganze Zahl von 0 bis 40, bevorzugt von 1 bis 25 und besonders bevorzugt von 2 bis 22.

In der Literatur werden auch käfigartige Strukturen für Aluminoxane diskutiert (Y. Koide, S.G. Bott, A.R. Barron *Organometallics* 1996, *15*, 2213-26; A.R. Barron *Macromol. Symp.* 1995, *97*, 15-25). Unabhängig davon, wie die Struktur der Aluminoxane tatsächlich aussieht, sind sie als Aktivatoren für Komplexe von Übergangsmetallen der allgemeinen Formeln I a bis c geeignet.

Gemische verschiedener Aluminoxane sind in den Fällen besonders bevorzugte Aktivatoren, in denen in einer Lösung eines Paraffins, beispielsweise n-Heptan oder Isododekan, polymerisiert wird. Eine besonders bevorzugtes Gemisch ist das kommerziell bei der Firma Witco GmbH erhältliche CoMAO mit einer Formel von [(CH₃)_{0,9}(iso-C₄H₉)_{0,1}AlO]ₙ.

Um die Komplexe der allgemeinen Formel I a bis c mit Aluminoxanen zu aktivieren, ist im Allgemeinen ein Überschuss von Aluminoxan, bezogen auf M, notwendig. Sinnvolle Molverhältnisse M:AI liegen im Bereich von 1:10 bis 1:10 000, bevorzugt 1:50 bis 1:1000 und besonders bevorzugt 1:100 bis 1:500.

Der gewählte Komplex der allgemeinen Formeln I a bis c und die Kationen-bildende Verbindung bilden zusammen ein Katalysatorsystem. Durch Zugabe einer oder mehrerer weiteren Aluminiumalkylverbindung der allgemeinen Formel Al(R²³)₃ kann die Aktivität dieses Katalysatorsystems weiter gesteigert werden.

Durch Zugabe von weiterem Aluminiumalkyl der allgemeinen Formel Al(R²³)₃ oder Aluminoxanen kann die Aktivität des Katalysatorsystems erhöht werden; Aluminiumalkyle der allgemeinen Formel Al(R²³)₃ oder Aluminoxane können auch als Molmassenregler wirken. Ein weiterer effektiver Molmassenregler ist Wasserstoff. Besonders gut kann man die Molmasse durch die Reaktionstemperatur und die Verweilzeit regeln.

Moderne großtechnische Herstellungsverfahren für Polyolefinwachse sind Lösungsverfahren, Suspensionsverfahren, Massepolymerisationsverfahren in flüssigem oder überkritischem Monomer sowie Gasphasenverfahren, wobei es sich bei letzteren um gerührte Gasphasen oder um Gasphasenwirbelschichtverfahren handeln kann.

Damit die Komplexe der allgemeinen Formeln I a bis c in Suspensionsverfahren, Massepolymerisationsverfahren oder Gasphasenverfahren eingesetzt werden können, ist es vorteilhaft, sie auf einem festen Träger zu immobilisieren. Andernfalls kann es zu Morphologieproblemen des Polymers (Brocken, Wandbeläge, Verstopfungen in Leitungen oder Wärmetauschern) kommen, die zum Abschalten der Anlage zwingen.

Katalysatorsysteme aus Komplexen der allgemeinen Formeln I a bis c und Aktivator lassen sich gut auf einem festen Träger abscheiden. Als Trägermaterialien kommen z.B. poröse Metalloxide von Metallen der Gruppen 2-14 oder Mischungen derselben infrage, weiterhin Schichtsilikate, aber auch feste Halogenide von Metallen der Gruppen 1, 2 und 13 und Polymere wie beispielsweise Polyethylen oder Polypropylen. Bevorzugte Beispiele für Metalloxide der Gruppen 2-14 sind SiO₂, B₂O₃, Al₂O₃, MgO, CaO und ZnO. Bevorzugte Schichtsilikate sind Montmorrilonite oder Bentonite; bevorzugte Halogenide sind MgCl₂ oder amorphes AlF₃.

Besonders bevorzugte Trägermaterialien sind sphärische Kieselgele und Alumosilikatgele der allgemeinen Formel SiO₂·a Al₂O₃, wobei a allgemein für eine Zahl im Bereich von 0 bis 2 steht, bevorzugt 0 bis 0,5. Derartige Kieselgele sind im Handel erhältlich, z.B. Silica Gel 332, Sylopol® 948 oder Sylopol 952 oder S 2101 der Fa. W.R. Grace oder ES 70X der Firma Crosfield.

Als Partikelgröße des Trägermaterials haben sich mittlere Teilchendurchmesser von 1-300 µm bewährt, bevorzugt von 20 bis 80 µm, wobei der Teilchendurchmesser durch bekannte Methoden wie Siebmethoden bestimmt wird. Das Porenvolumen dieser Träger beträgt 1,0 bis 3,0 ml/g, bevorzugt von 1,6 bis 2,2 ml/g und besonders bevorzugt von 1,7 bis 1,9 ml/g. Die BET-Oberfläche beträgt 200 bis 750 m²/g, bevorzugt 250 bis 400 m²/g.

Um dem Trägermaterial anhaftende Verunreinigungen, insbesondere Feuchtigkeit, zu entfernen, können die Trägermaterialien vor der Dotierung ausgeheizt werden, wobei sich Temperaturen von 45 bis 1000°C eignen. Temperaturen von 100 bis 750°C sind für Kieselgele und andere Metalloxide besonders geeignet; für MgCl₂-Träger sind Temperaturbereiche von 50 bis 100°C bevorzugt. Dieses Ausheizen sollte über einen Zeitraum von 0,5 bis 24 Stunden erfolgen, wobei Ausheizzeiten von 1 bis 12 Stunden bevorzugt sind. Die Druckbedingungen sind an sich unkritisch; das Ausheizen kann bei Atmosphärendruck erfolgen. Vorteilhaft sind jedoch verminderte Drücke von 0,1 bis 500 mbar, besonders vorteilhaft ist ein Bereich von 1 bis 100 mbar und ganz besonders vorteilhaft ein Bereich von 2 bis 20 mbar. Auch eine chemische vorbehandlung des Trägermaterials ist möglich.

Zur Dotierung des Katalysators verfährt man im Allgemeinen so, dass man das Trägermaterial in einem Suspensionsmittel aufschlämmt und diese Suspension mit der Lösung des Triazacyclohexan-Komplexes und des Aktivators vereinigt. Dabei beträgt das Volumen des Suspensionsmittels das 1- bis 20-fache des Porenvolumens des Katalysatorträgers. Anschließend kann der Katalysator durch eine geeignete Methode vom Suspensionsmittel getrennt werden, wie filtrieren, zentrifugieren oder eindampfen.

Zur besseren Kontrolle der Morphologie kann man den Katalysator vor der eigentlichen Polymerisation mit geringen Mengen Monomer vorpolymerisieren. Die Vorpolymerisation kann man durch Dosierung eines reversiblen Katalysatorgiftes oder durch Beenden der Monomerdosierung abbrechen und anschließend den vorpolymerisierten Katalysator in die Polymerisationsanlage dosieren.

Um eine bei Polymerisationen mitunter zu beobachtende elektrostatische Aufladung der Polymerisationsanlage oder des Produkts zu vermeiden, kann man der Reaktionsmischung ein Antistatikum zusetzen. Geeignete Antistatika sind verdünnte Lösungen aliphatischer Alkohole, beispielsweise Isopropanol, in Paraffinen wie beispielsweise n-Heptan. Weitere geeignete Antistatika sind als Stadis®-Marken von der Firma DuPont kommerziell erhältlich.

Die mit Hilfe eines Komplexes der allgemeinen Formel I a bis c nach einem der genannten Polymerisationsverfahren erhaltenen Polyolefinwachse lassen sich durch verschiedene Methoden zu Masterbatchen weiterverarbeiten, denen gemeinsam ist, dass Wachs und Trägerpolymer im entscheidenden Schritt aufgeschmolzen werden, das Pigment aber nicht, und das oder die Pigmente sowie optional Zuschlagsstoffe eingearbeitet werden.

Vor der eigentlichen Mischung können die Komponenten optional vorgemischt werden, wozu sich Trommel- oder Taumelmischer besonders eignen. Auch Mikronisierungen können optional durchgeführt werden.

Bei der eigentlichen Mischung unterscheidet man diskontinuierliche und kontinuierliche Verfahren. Für diskontinuierliche Verfahren lassen sich einfache Kneter verwenden; kontinuierliche Verfahren lassen sich beispielsweise in Schnellmischern, Einschneckenextrudern, Zweischneckenextrudern, Buss-Knetern, Planetwalzenextrudern, offenen Doppelmuldenknetern oder Schnellrührern ausführen.

Anschließend werden die Pigmentkonzentrate in üblicher Weise granuliert. Dazu lassen sich Stranggranulatoren verwenden, bei denen das Gemisch als Strang unter Wasser abgekühlt werden und dann entweder noch im oder aber nach Verlassen des Wasserbades zu Pellets oder Granulat geschnitten wird. Weiterhin sind Lochplatten als Schneidemittel geeignet ("Heißabschlagverfahren") .

Zur Herstellung der Formkörper und Flächengebilde geht man so vor, dass man zunächst ein Gemisch aus
- 0,01 bis 10 Gew.-% Pigmentkonzentrat, bevorzugt 0,5 bis 5 Gew.-% Pigmentkonzentrat und besonders bevorzugt 0,5 bis 2,5Gew.-% Pigmentkonzentrat, mit
- 90 bis 99,99 Gew.-% einzufärbendes Polymer, bevorzugt 95 bis 99,5 und besonders bevorzugt 97,5 bis 98,5 Gew.-% Polymer sowie optional
- 0 bis 5 Gew.-% Zuschlagstoffen, wobei Antioxidantien oder Biozide bevorzugte Zuschlagstoffe sind, herstellt.

Als einzufärbendes Polymer sind geeignet: Polyethylen, Polypropylen, Polystyrol, Polyoxymethylen, Polyethylenterephthalat, Polybutylenterephthalat, Polymethylmethacrylat, Polyethersulfone, Polysulfone, Polyetherketone, Polystyrol-Copolymere, Acrylnitril-Butadien-Styrol-Terpolymere, Polyamide wie Nylon-6 oder Nylon-6,6, Polyvinylchlorid sowie Copolymerisate von Ethylen mit 0,1-20 mol-% 1-Buten, 1-Penten, 1-Hexen, 4-Methyl-1-Penten, 1-Octen, 1-Decen oder 1-Undecen. Dabei können das einzufärbende Polymer und das Trägerpolymer des Masterbatchs gleich sein, müssen aber nicht.

Zum Mischen der Pigmentkonzentrate mit den Polymeren sowie optional den Zuschlagstoffen lassen sich prinzipiell die gleichen Verfahren einsetzen wie zur Herstellung des Masterbatchs selber. Für diskontinuierliche Verfahren lassen sich wiederum einfache Kneter verwenden; kontinuierliche Verfahren lassen sich beispielsweise in Schnellmischern, Einschneckenextrudern, Zweischneckenextrudern, Buss-Knetern, Planetwalzenextrudern, offenen Doppelmuldenknetern oder Schnellrührern ausführen. Dabei sind kontinuierliche Verfahren bevorzugt.

Die Herstellung der Formkörper und Flächengebilde kann durch Spritzgießen, Folienextrusion oder Gießen bei Temperaturen oberhalb des Schmelzpunkts des Polymers erfolgen. Die Verarbeitungseigenschaften der erfindungsgemäßen Formkörper und Flächengebilde werden durch den Einsatz der erfindungsgemäßen Pigmentkonzentrate nicht unvorteilhaft beeinflusst.

Die nach dem erfindungsgemäßen Verfahren erhaltenen Formkörper und Flächengebilde unterscheiden sich von den im Handel erhältlichen Formkörpern und Flächengebilden durch eine deutlich höhere Brillanz in der Farbe. Die mechanischen Eigenschaften der Werkstoffe werden durch den Einsatz der erfindungsgemäßen Pigmentkonzentrate nicht unvorteilhaft beeinflusst.

### Arbeitsbeispiel:

Herstellung des Komplexes (n-C₁₂H₂₅NCH₂)₃CrCl₃ und Polymerisation von Ethylen sind in DE-A 199 35 407 in PCT/EP 0002716 [WO 00/5837 (A1)] bzw. in Angew. Chem. Int. Edition, 1994 Bd. 33, S. 1877 grundsätzlich beschrieben.

In einem 1-Liter-Stahlautoklav (Fa. Büchi) wurde 5 mg (6,7 µmol) (n-C₁₂H₂₅NCH₂)₃CrCl₃, gelöst in Toluol, mit 1,4 ml 30% MAO (Methylaluminoxan) der Fa. Witco aktiviert, wobei ein Al:Cr-Verhältnis von 1000:1 eingestellt wurde. Es wurden 400 ml Isobutan und 8 l (0,38 mol) Wasserstoff aufgepresst, danach wurde der Autoklav auf 90°C erwärmt. Anschließend wurden 40 bar Ethylen aufgepresst und 30 Minuten polymerisiert, wobei der Druck durch Nachdosieren von Ethylen bei 40 bar gehalten wurde.

Die Polymerisation wurde durch Entspannen des Autoklaven abgebrochen.

Ausbeute: 46 g, das entspricht einer Aktivität von 14000 kg PE(mol Cr·h).

Das so erhaltene Wachs hatte die folgenden Eigenschaften: Festpunkt 128,5°C; M_{w}: 5200 g, Mₙ: 2100 g. M_{w}/Mₙ = 2,5.

Als Komponenten für das erfindungsgemäße Pigmentkonzentrat im Arbeitsbeispiel 1 wurden die folgenden Komponenten verwendet:
30 Gew.-% Heliogen® Blau (kommerziell erhältlich bei BASF AG)
15 Gew.-% Polyethylenwachs,
55 Gew.-% Polyethylen (Lupolen® -1800 S) als Granulat (kommerziell erhältlich bei Elenac GmbH)

Im analog verarbeiteten Arbeitsbeispiel 2 wurden die folgenden Komponenten verwendet:
30 Gew.-% Heliogen® Grün, (kommerziell erhältlich bei BASF AG)
15 Gew.-% Polyethylenwachs,
55 Gew.-% Polyethylen (Lupolen® 1800 S) als Granulat (kommerziell erhältlich beiElenac GmbH)

Die Komponenten wurden in einem Schnellrührer vorgemischt und bis zum Schmelzpunkt des Wachses erwärmt. Das Wachs benetzte dabei das Pigment, machte es staubfrei und trug zur Dispergierung des Pigments in der Wachsphase bei. Anschließend wurde diese Mischung auf einen Doppelschneckenextruder aufgegeben. Die Temperatur wurde um weitere 10°C erhöht. Während dieses Arbeitsschritts wurde das PE-Granulat mit einer dünnen Wachsschicht ummantelt. Nach der Extrusion wurde das Pigmentkonzentrat so vorsichtig abgekühlt, dass die fest gewordene Pigment/Wachsschicht nicht voneinander gelöst wurden.

Die Herstellung der Vergleichsprodukte erfolgte analog. Als Wachse wurden kommerziell erhältliche Proben verwendet.

Zur Überprüfung der Farbintensität wurden jeweils 1 g Pigmentkonzentrat aus den angegebenen Beispielen mit 91,5 g Lupolen 50D und 7,5 g TiO₂ als optischem Aufheller vorgemischt, auf einer Blasformmaschine bei 130 bis 150°C gemischt und zu Kanistern blasgeformt.

Zur Beurteilung der Farbintensitäten wurde ein 5 x 5 cm großes Stück aus den Kanistern herausgeschnitten und im Wellenlängenbereich von 400-700 nm spektralphotometrisch (Gerät Spectraflash 600) der Firma Datacolor nach DIN 6176 untersucht.

Die Ergebnisse gehen aus Tabelle 1 hervor.

**Tabelle 1:**

| Farbstärkebeurteilungen der Beispiele 1-2 und V 1a/b sowie V 2a/b | | | |
|---|---|---|---|
| Beispiel | Polyethylenwachs | Pigment | Farbstärkebeurteilung |
| Nummer | (Herstellungsprozess) | Phthalocyanin | |
| 1 | (n-C₁₂H₂₅NCH₂)₃CrCl₃ | Heliogen® Blau K 6911 D | 100 % |
| V 1a | Hochdruck¹ | Heliogen Blau K6911 D | 85,3 % |
| V 1b | Ziegler-Natta² | Heliogen Blau K6911 D | 88,2 % |
| 2 | (n-C₁₂H₂₅NCH₂)₃CrCl₃ | Heliogen Grün K8730 | 100 % |
| V 2a | Hochdruck | Heliogen Grün K8730 | 82,7 % |
| V 2b | Ziegler-Natta | Heliogen Grün K8730 | 89,5 % |
| ¹ Luwax® A, käuflich zu erwerben bei BASF AG. | | | |
| ² Clariant-Wachs PE 520, käuflich zu erwerben bei Clariant AG | | | |

## Patentansprüche

1. Pigmentkonzentrate, enthaltend
A) mindestens ein Farbstoffpigment,
B) ein Polyolefinwachs, das hergestellt wird aus einem oder mehreren Olefinen durch Katalyse mit einem Single-Site-Katalysator auf Basis eines Komplexes der Formel I a bis I c 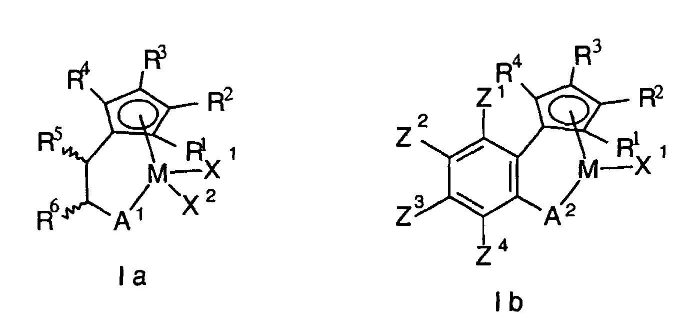 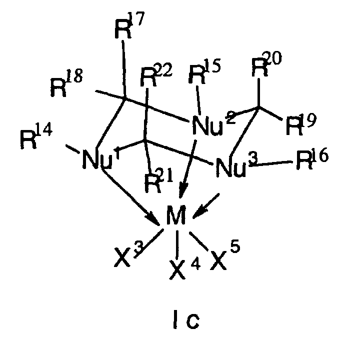 in denen die Variablen wie folgt definiert sind:
M ist ein Element aus der Reihe V, Nb, Ta, Cr, Mo, W, Mn, Fe in der Oxidationsstufe +3
X¹ bis X⁵ unabhängig voneinander gewählt aus Halogen, Trifluoracetat, BF₄⁻, PF₆⁻, SbF₆⁻, C₁-C₁₈-Alkyl,
C₃-C₁₂-Cycloalkyl,
C₇-C₂₀-Aralkyl,
C₆-C₁₄-Aryl,
C₁-C₁₂-Alkoxy,
NR⁸R⁹, wobei R⁸ und R⁹ unabhängig voneinander gewählt sind aus Wasserstoff, C₁-C₁₂-Alkyl, C₂-C₁₂-Alkenyl, C₆-C₁₄-Aryl, die einen gesättigten oder ungesättigten 5- bis 10-gliedrigen Ring bilden können;
R¹ bis R⁶, Z¹ bis Z⁴, R¹⁴ bis R¹⁶ unabhängig voneinander gewählt aus
Wasserstoff,
Halogen,
C₁-C₁₈-Alkyl,
ein- oder mehrfach mit Donoratomen substituiertes C₁-C₁₂-Alkyl,
ein- oder mehrfach halogenierte C₁-C₁₂-Alkylgruppen, C₂-C₁₂-Alkenyl,
C₃-C₁₂-Cycloalkyl,
C₇- bis C₂₀-Aralkyl,
C₆-C₁₄-Aryl,
Silyl SiR¹⁰R¹¹R¹², wobei R¹⁰ bis R¹² unabhängig voneinander aus Wasserstoff, C₁-C₁₂-Alkyl, C₇-C₁₅-Aralkyl und C₆-C₁₄-Aryl ausgewählt sind;
Siloxy OSiR¹⁰R¹¹R¹²,
C₁-C₁₂-Alkoxy,
C₆-C₁₄-Aryl, das seinerseits substituiert ist mit einem oder mehreren C₁-C₁₂-Alkyl, C₁-C₁₂-Alkenyl, C₃-C₁₂-Cycloalkyl, C₆-C₁₄-Aryl, Silyl SiR¹⁰R¹¹R¹²,Siloxy OSiR¹⁰R¹¹R¹² oder C₁-C₁₂-Alkoxy;
wobei zwei benachbarte Reste miteinander unter Einbeziehung des Stammaromaten in Formel I a bzw. I b einen 5- bis 10-gliedrigen Ring bilden können;
R¹⁷ bis R²² unabhängig voneinander gewählt aus Wasserstoff,
C₁-C₁₈-Alkyl,
ein- oder mehrfach mit Donoratomen substituiertes C₁-C₁₂-Alkyl,
ein- oder mehrfach halogenierte C₁-C₁₂-Alkylgruppen, C₂-C₁₂-Alkenyl,
C₃-C₁₂-Cycloalkyl,
C₇- bis C₂₀-Aralkyl,
C₆-C₁₄-Aryl,
Silyl SiR¹⁰R¹¹R¹², wobei R¹⁰ bis R¹² unabhängig voneinander aus Wasserstoff, C₁-C₁₂-Alkyl, C₇-C₁₅-Aralkyl und C₆-C₁₄-Aryl ausgewählt sind;
Siloxy OSiR¹⁰R¹¹R¹²,
C₁-C₁₂-Alkoxy,
C₆-C₁₄-Aryl, das seinerseits substituiert ist mit einem oder mehreren C₁-C₁₂-Alkyl, C₁-C₁₂-Alkenyl, C₃-C₁₂-Cycloalkyl, C₆-C₁₄-Aryl, Silyl SiR¹⁰R¹¹R¹², Siloxy OSiR¹⁰R¹¹R¹² oder C₁-C₁₂-Alkoxy;
wobei zwei benachbarte Reste R¹⁴ bis R²² in Formel I c miteinander einen gesättigten oder ungesättigten 4-bis 9-gliedrigen Ring bilden können;
A¹ O-R¹³, S-R¹³, N-(R¹³)₂ oder P-(R¹³)₂ zu verstehen, wobei R¹³ ausgewählt wird aus Halogen, C₁-C₁₂-Alkyl, C₃-C₁₂-Cycloalkyl, substituierten oder unsubstituierten C₆-C₁₄-Arylgruppen oder C₁-C₁₂-Alkoxygruppen und wobei diese Gruppen wie bei R¹ bis R⁶ definiert sind;
A² Sauerstoff, Schwefel, N-R¹³ oder P-R¹³ zu verstehen,
wobei R¹³ ausgewählt wird aus Halogen, C₁-C₁₂-Alkyl, C₃-C₁₂-Cycloalkyl, substituierten oder unsubstituierten C₆-C₁₄-Arylgruppen oder C₁-C₁₂-Alkoxygruppen und wobei diese Gruppen wie bei R¹ bis R⁶ definiert sind;
wobei Z⁴ und A² in Formel I b miteinander unter Einbeziehung des Phenylrings in Formel I b einen 5- bis 10-gliedrigen Ring bilden können;
Nu¹ bis Nu³ jeweils N oder P bedeuten,
C) optional einen thermoplastischen Kunststoff und
D) optional Zuschlagstoffe.

2. Pigmentkonzentrate gemäß Anspruch 1, **dadurch gekennzeichnet, dass** der Single-Site-Katalysator als katalytisch aktive Komponente einen Triazacyclohexankomplex oder einen Triphosphacyclohexankomplex der Formel 1c enthält.

3. Pigmentkonzentrate gemäß den Ansprüchen 1 und 2, **dadurch gekennzeichnet**, in Formel Ic M gleich Cr bedeutet.

4. Pigmentkonzentrate gemäß den Ansprüchen 1 bis 3, enthaltend mindestens ein Farbstoffpigment, ein Polyolefinwachs, einen thermoplastischen Kunststoff sowie Zuschlagstoffe.

5. Pigmentkonzentrate gemäß den Ansprüchen 1 bis 3, enthaltend mindestens ein Farbstoffpigment, ein Polyolefinwachs sowie Zuschlagstoffe.

6. Verfahren zur Herstellung von Pigmentkonzentraten gemäß Anspruch 1 bis 5, **dadurch gekennzeichnet, dass** die Komponenten oberhalb des Schmelzpunkts des Wachses gemischt werden.

7. Verfahren zur Herstellung von Pigmentkonzentraten gemäß Anspruch 4, **dadurch gekennzeichnet, dass** die Komponenten oberhalb des Schmelzpunkts von Wachs und Trägerpolymer gemischt werden.

8. Kunststoffformkörper und Kunststoffflächengebilde, eingefärbt mit Pigmentkonzentraten gemäß den Ansprüchen 1 bis 5.

9. Verfahren zum Einfärben von Kunststoffformkörpern und Kunststoffflächengebilden mit Pigmentkonzentraten gemäß den Ansprüchen 1 bis 5, **dadurch gekennzeichnet, dass** Kunststoff und Pigmentkonzentrat durch Homogenisieren in der Schmelze gemischt werden.

## Claims

1. A pigment concentrate, comprising
A) at least one pigment,
B) a polyolefin wax prepared from one or more olefins by catalysis with a single-site catalyst based on a complex of the formula Ia to Ic 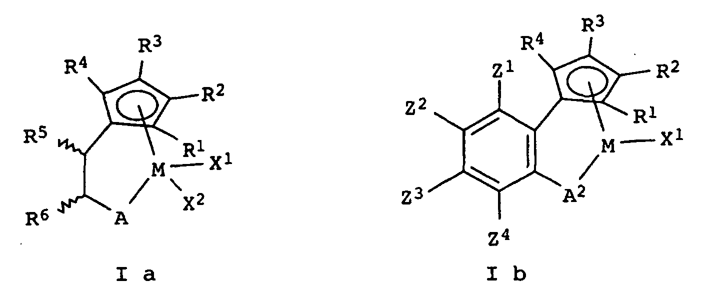 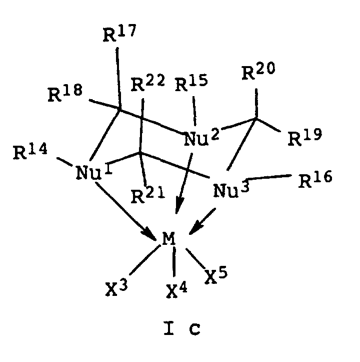 where:
M is an element from the group V, Nb, Ta, Cr, Mo, W, Mn, Fe in the oxidation stage +3
X¹ to X⁵ have been selected, independently of one another, from halogen, trifluoroacetate, BF₄⁻, PF₆⁻, SbF₆⁻,
C₁-C₁₈-alkyl,
C₃-C₁₂-cycloalkyl,
C₇-C₂₀-aralkyl,
C₆-C₁₄-aryl,
C₁-C₁₂-alkoxy,
NR⁸R⁹, where R⁸ and R⁹ have been selected, independently of one another, from hydrogen, C₁-C₁₂-alkyl, C₂-C₁₂-alkenyl, C₆-C₁₄-aryl, where these may form a saturated or unsaturated 5- to 10-membered ring;
R¹ to R⁶, Z¹ to Z⁴, and R¹⁴ to R¹⁶ have been selected, independently of one another, from hydrogen, halogen,
C₁-C₁₈-alkyl,
C₁-C₁₂-alkyl having one or more donor-atom substituents,
mono- or polyhalogenated C₁-C₁₂-alkyl groups,
C₂-C₁₂-alkenyl,
C₃-C₁₂-cycloalkyl,
C₇-C₂₀-aralkyl,
C₆-C₁₄-aryl,
silyl SiR¹⁰R¹¹R¹², where R¹⁰ to R¹² have been selected, independently of one another, from hydrogen, C₁-C₁₂-alkyl, C₇-C₁₅-aralkyl, and C₆-C₁₄-aryl;
siloxy OSiR¹⁰R¹¹R¹²,
C₁-C₁₂-alkoxy,
C₆-C₁₄-aryl, which in turn has substitution by one or more C₁-C₁₂-alkyl, C₂-C₁₂-alkenyl, C₃-C₁₂-cycloalkyl, C₆-C₁₄-aryl, silyl SiR¹⁰R¹¹R¹², siloxy OSiR¹⁰R¹¹R¹², or C₁-C₁₂-alkoxy;
where two adjacent radicals may together form a 5- to 10-membered ring involving the parent aromatic system in formula I a or I b;
R¹⁷ to R²² have been selected, independently of one another, from
hydrogen,
C₁-C₁₈-alkyl,
C₁-C₁₂-alkyl having one or more donor-atom substituents,
mono- or polyhalogenated C₁-C₁₂-alkyl groups,
C₂-C₁₂-alkenyl,
C₃-C₁₂-cycloalkyl,
C₇-C₂₀-aralkyl,
C₆-C₁₄-aryl,
silyl SiR¹⁰R¹¹R¹², where R¹⁰ to R¹² have been selected, independently of one another, from hydrogen, C₁-C₁₂-alkyl, C₇-C₁₅-aralkyl, and C₆-C₁₄-aryl;
siloxy OSiR¹⁰R¹¹R¹²,
C₁-C₁₂-alkoxy,
C₆-C₁₄-aryl, which in turn has substitution by one or more C₁-C₁₂-alkyl, C₂-C₁₂-alkenyl, C₃-C₁₂-cycloalkyl, C₆-C₁₄-aryl, silyl SiR¹⁰R¹¹R¹², siloxy OSiR¹⁰R¹¹R¹², or C₁-C₁₂-alkoxy;
where two adjacent radicals R¹⁴ to R²² in formula I c may together form a saturated or unsaturated 4- to 9-membered ring;
A¹ is O-R¹³, S-R¹³, N-(R¹³)₂ or P-(R¹³)₂, where R¹³ is selected from halogen, C₁-C₁₂-alkyl, C₃-C₁₂-cycloalkyl, substituted or unsubstituted C₆-C₁₄-aryl groups or C₁-C₁₂-alkoxy groups, and where these groups have the definitions given for R¹ to R⁶;
A² is oxygen, sulfur, N-R¹³ or P-R¹³, where R¹³ is selected from halogen, C₁-C₁₂-alkyl, C₃-C₁₂-cycloalkyl, substituted or unsubstituted C₆-C₁₄-aryl groups or C₁-C₁₂-alkoxy groups, and where these groups have the definitions given for R¹ to R⁶;
where Z⁴ and A² in formula I b may together form a 5-to 10-membered ring with involvement of the phenyl ring in formula I b;
each of Nu¹ to Nu³ is N or P,
C) if desired, a thermoplastic, and
D) if desired, additives.

2. A pigment concentrate as claimed in claim 1, wherein the single-site catalyst comprises, as catalytically active component, a triazacyclohexane complex, or a triphosphacyclohexane complex, of the formula 1c.

3. A pigment concentrate as claimed in claim 1 or 2, wherein M in formula Ic is Cr.

4. A pigment concentrate as claimed in any of claims 1 to 3, comprising at least one pigment, one polyolefin wax, one thermoplastic, and also additives.

5. A pigment concentrate as claimed in any of claims 1 to 3, comprising at least one pigment, one polyolefin wax, and also additives.

6. A process for preparing pigment concentrates as claimed in any of claims 1 to 5, which comprises mixing the components at above the melting point of the wax.

7. A process for preparing pigment concentrates, as claimed in claim 4, wherein the components are mixed at above the melting point of wax and carrier polymer.

8. A plastic molding or plastic sheet, pigmented using pigment concentrates as claimed in any of claims 1 to 5.

9. A process for pigmenting plastic moldings or plastic sheets, using pigment concentrates as claimed in any of claims 1 to 5, which comprises mixing plastic and pigment concentrate by melt-homogenization.

## Revendications

1. Concentrés pigmentaires contenant
A) au moins un pigment coloré,
B) une cire de polyoléfine préparée à partir d'une ou plusieurs oléfines à l'aide d'un catalyseur « à site unique » à base d'un complexe de formule Ia à Ic 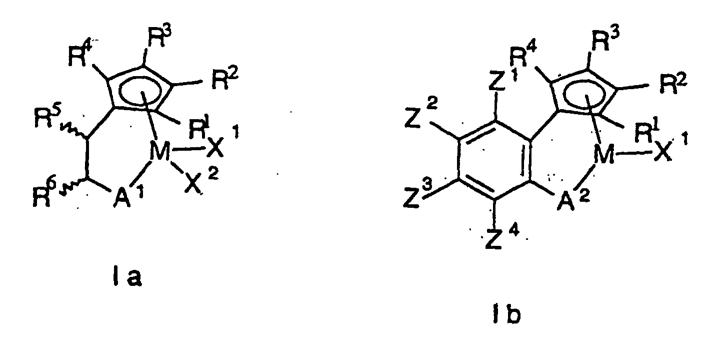 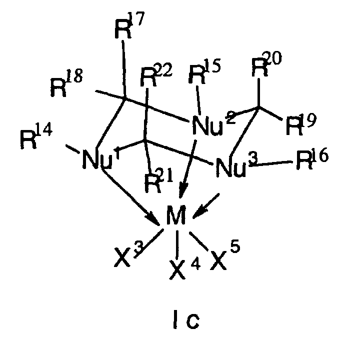 dans lesquelles les symboles ont les significations suivantes:
M représente un élément du groupe consistant en V, Nb, Ta, Cr, Mo, W, Mn, Fe au stade d'oxydation +3,
X¹ à X⁵ représentent chacun, indépendamment les uns des autres, un halogène, un groupe trifluoracétate, BF₄⁻, PF₆⁻, SbF₆⁻,
un groupe alkyle en C1-C18,
un groupe cycloalkyle en C3-C12,
un groupe aralkyle en C7-C20,
un groupe aryle en C6-C14,
un groupe alcoxy en C1-C12,
un groupe NR⁸R⁹ pour lequel R⁸ et R⁹ sont choisis chacun, indépendamment l'un de l'autre, parmi l'oxygène, les groupes alkyle en C1-C12, alcényle en C2-C12, aryle en C6-C14, qui peuvent former un cycle saturé ou insaturé de 5 à 10 chaînons ;
R¹ à R⁶, Z¹ à Z^{4,R}14 à R¹⁶ sont choisis chacun, indépendamment les uns des autres, parmi
l'hydrogène,
les halogènes,
les groupes alkyle en C1-C18,
les groupes alkyle en C1-C12 substitués par un ou plusieurs atomes donateurs,
les groupes alkyle en C1-C12 portant un ou plusieurs substituants halogéno,
les groupes alcényle en C2-C12,
les groupes cycloalkyle en C3-C12,
les groupes aralkyle en C7-C20,
les groupes aryle en C6-C14,
les groupes silyle SiR¹⁰R¹¹R¹² représentent chacun, indépendamment les uns des autres, l'hydrogène, un groupe alkyle en C1-C12, aralkyle en C7-C15 ou aryle en C6-C 14,
les groupes siloxy OsiR¹⁰R¹¹R¹²,
les groupes alcoxy en C1-C12,
les groupes aryle en C6-C14 portant eux-mêmes un ou plusieurs substituants alkyle en C1-C12, alcényle en C1-C12, cycloalkyle en C3-C12, aryle en C6-C14, silyle SiR¹⁰R¹¹R¹², siloxy OsiR¹⁰R¹¹R¹² ou alcoxy en C1-C12,
deux groupes voisins pouvant former ensemble et avec le radical aromatique de base des formules Ia et Ib un cycle de 5 à 10 chaînons,
R¹⁷ à R²² représentent chacun, indépendamment les uns des autres,
l'hydrogène,
un groupe alkyle en C1 -C18,
un groupe alkyle en C1-C12 substitué par un ou plusieurs atomes donateurs,
un groupe alkyle en C1-C12 portant un ou plusieurs substituants halogéno,
un groupe alcényle en C2-C12,
un groupe cycloalkyle en C3-C12,
un groupe aralkyle en C7-C20,
un groupe aryle en C6-C14,
un groupe silyle SiR¹⁰R¹¹R¹² dans lequel R¹⁰ à R¹² représentent chacun, indépendamment les uns des autres, l'hydrogène, un groupe alkyle en C1-C12, aralkyle en C7-C15 ou aryle en C6-C14 ;
un groupe siloxy OsiR¹⁰R¹¹R¹²,
un groupe alcoxy en C1-C12,
un groupe aryle en C6-C14 qui peut lui-même porter un ou plusieurs substituants alkyle en C1-C12, alcényle en C1-C12, cycloalkyle en C3-C12, aryle en C6-C14, silyle SiR¹⁰R¹¹R¹² ou alcoxy en C1-C12 ;
deux groupes voisins parmi R¹⁴ à R²² pouvant former ensemble, dans la formule Ic, un cycle saturé ou insaturé de 4 à 9 chaînons ;
A¹ représente un groupe O-R¹³, S-R¹³, N-(R¹³)₂ ou P-(R¹³)₂ dans lequel R¹³ est choisi parmi les halogènes, les groupes alkyle en C1-C12, cycloalkyle en C3-C12, les groupes aryle en C6-C14 substitués ou non ou les groupes alcoxy en C1-C12, ces groupes étant tels que définis pour R¹ à R⁶ ;
A² représente l'oxygène, le soufre, un groupe N-R¹³ ou P-R¹³, R¹³ étant choisi parmi les halogènes, les groupes alkyle en C1-C12, cycloalkyle en C3-C12, les groupes aryle substitués ou non en C6-C 14 ou les groupes alcoxy en C1-C12, ces groupes étant tels que définis pour R¹ à R⁶;
Z⁴ et A² pouvant former ensemble dans la formule Ib, avec le cycle phényle de cette formule, un cycle de 5 à 10 chaînons;
Nu¹ à Nu³ représentent chacun N ou P,
C) éventuellement une résine synthétique thermoplastique et
D) éventuellement des additifs.

2. Concentrés pigmentaires selon la revendication 1, **caractérisés en ce que** le catalyseur « à site unique » contient en tant que composant possédant l'activité catalytique un complexe de triazacyclohexane ou un complexe de triphosphacyclohexane de formule Ic.

3. Concentrés pigmentaires selon les revendications 1 et 2, **caractérisés en ce que**, dans la formule Ic, M représente le chrome.

4. Concentrés pigmentaires selon les revendications 1 à 3, contenant au moins un pigment coloré, une cire de polyoléfine, une résine synthétique thermoplastique et des additifs.

5. Concentrés pigmentaires selon les revendications 1 à 3, contenant au moins un pigment coloré, une cire de polyoléfine et des additifs.

6. Procédé pour la préparation des concentrés pigmentaires selon les revendications 1 à 5, **caractérisé en ce que** l'on mélange les composants au-dessus du point de fusion de la cire.

7. Procédé pour la préparation des concentrés pigmentaires selon la revendication 4, **caractérisé en ce que** l'on mélange les composants au-dessus du point de fusion de la cire et du polymère de support.

8. Corps moulés en résines synthétiques et articles planiformes en résines synthétiques colorés à l'aide de concentrés pigmentaires selon les revendications 1 à 5.

9. Procédé pour colorer des corps moulés en résines synthétiques et des articles planiformes en résines synthétiques à l'aide de concentrés pigmentaires selon les revendications 1 à 5, **caractérisé en ce que** l'on mélange la résine synthétique et le concentré pigmentaire par homogénéisation à l'état fondu.
